# EUROPEAN PATENT APPLICATION

(11) **EP 2 214 439 A1**
(43) Date of publication of application: **04.08.2010**
(21) Application number: 08845589.4
(22) Date of filing: 27.10.2008
(51) Int. Cl.: H04W 36/30, H04W 8/08, H04W 16/28

(54) **MOBILE COMMUNICATION SYSTEM, BASE STATION, MOBILE STATION, AND BASE STATION INSTALLATION METHOD**

(30) Priority: 31.10.2007 JP 2007283621
(71) Applicant: Mitsubishi Electric Corporation, Tokyo 100-8310 (JP)
(72) Inventor: SUEMITSU, Taisei, Tokyo 100-8310 (JP); SUZUKI, Kuniyuki, Tokyo 100-8310 (JP); KISHISHITA, Nariaki, Tokyo 100-8310 (JP); KATADA, Futoshi, Tokyo 100-8310 (JP); OKAMOTO, Keiji, Tokyo 100-8310 (JP)
(74) Representative: Popp, Eugen
(86) International application number: PCT/JP2008/069424
(87) International publication number: WO 2009/057544

(57) **Abstract**

The present invention provides a mobile communication system that eliminates dead spots to allow a mobile station to stably communicate with base stations, and that reduces the rate of handover failures and reduces the number of handovers. In a mobile communication system according to the present invention, a mobile station (11) is configured to obtain data quality information, and it provides the obtained data quality information to a base station A when it is quality information about data from the base station A, and it provides the data quality information to a base station B when it is quality information about data from the base station B. The base stations A and B are configured to provide a base station host apparatus (14) with the quality information from the mobile station (11) as historical information about the mobile station (11), and the base station host apparatus (14) is configured to compare the pieces of quality information sent from the two base stations, select one base station with better quality, instructs it to communicate with the mobile station (11), and instructs the other not to communicate with the mobile station (11).

## Description

### Technical Field

The present invention relates to a mobile communication system in which mobile and base stations communicate with each other.

### Background Art

In mobile communication, as disclosed in Patent Document 1, for example, there is a scheme in which, when a mobile station (mobile node) performs a handover by changing the connected base station, the link bandwidths of the mobile station before and after the handover are compared and an upper layer discards packets of, e.g. TCP (Transmission Control Protocol)/ RTP (Real-time Transport Protocol) or adjust the rate. This enables packet handling in accordance with the upper layer and improves communication performance during handover.

Also, as disclosed in Patent Document 2, for example, there is a scheme in which a home memory station that manages positional information about terminals is employed to find a particular terminal moving together with a monitored terminal. This enables finding a particular terminal moving together with the monitored terminal.

Also, as disclosed in Patent Document 3, for example, there is a scheme in which an emergency center having a positional information obtaining function and a neighboring information collecting function is employed to send emergency mail from a terminal of a person who was involved in an incident/accident to terminals in the neighborhood. This enables quickly sending emergency information to neighboring terminals.

Patent Document 1: Japanese Patent Application Laid-Open No. 2005-348166
Patent Document 2: Japanese Patent Application Laid-Open No. 2005-286955
Patent Document 3: Japanese Patent Application Laid-Open No. 2005-222373

### Disclosure of the Invention

In the scheme disclosed in Patent Document 1, not the mobile station but the network side merely compares link bandwidths before and after handover, and there is no information judged from the terminal's point of view, so that the amount of information for discarding packets or adjusting rate cannot be very precise.

Also, in the scheme disclosed in Patent Document 2, the base station merely manages signals sent from mobile stations to specify the positions of mobile stations, so that it does not offer the effects to reduce handover failures and eliminate dead spots.

Also, in the scheme disclosed in Patent Document 3, even though an emergency center having a positional information obtaining function and a neighboring information collecting function is employed, the emergency center is merely placed in a particular place, so that dead spots for base stations cannot be specified in detail, and it does not offer the effects to reduce dead spots and enable efficient handover.

The present invention has been made to solve problems as described above, and an object of the present invention is to provide a mobile communication system that eliminates dead spots to allow mobile stations to stably communicate with base stations, and to provide a mobile communication system that reduces the rate of handover failures and reduces the number of handovers.

A first aspect of the mobile communication system according to the present invention provides a mobile communication system comprising a mobile station, a base station, and a base station host apparatus, wherein said mobile station provides said base station as historical information with any of information about communication quality between said mobile station and said base station, information about behavior of said mobile station, information about communication condition between said mobile station and said base station, and information about handover of said mobile station, and wherein, on the basis of said historical information, said base station, or said base station host apparatus that received said historical information through said base station, gives an instruction for specifying of a handover destination for said mobile station or for beam control for said base station.

A second aspect of the mobile communication system according to the present invention provides a mobile communication system comprising a mobile station, a base station, and a base station host apparatus, wherein said mobile station provides said base station as historical information with information about a fading environment where said mobile station is placed, and wherein on the basis of said historical information, said base station, or said base station host apparatus receiving said historical information through said base station, gives an instruction for specifying of a handover destination for said mobile station or for beam control for said base station.

A third aspect of the mobile communication system according to the present invention provides a mobile communication system comprising a mobile station and a plurality of base stations, wherein said mobile station is capable of communicating simultaneously with said plurality of base stations, and wherein said mobile station transmits/ receives data by using different sub-carriers to and from said plurality of base stations.

### [Effects of the Invention]

According to the present invention, on the basis of historical information from a mobile station, a base station or a base station host apparatus gives instructions for the specifying of a handover destination for the mobile station or for beam control for the base station, whereby a mobile communication system is established which reduces the rate of handover failures and reduces the number of handovers, and which reduces dead spots to allow the mobile station to stably communicate with the base station.

According to the present invention, a mobile station transmits/ receives different data by using different sub-carriers to and from a plurality of base stations, whereby a larger amount of data can be transmitted than when it transmits same data.

These and other objects, features, aspects and advantages of the present invention will become more apparent from the following detailed description of the present invention when taken in conjunction with the accompanying drawings.

### Brief Description of the Drawings

[FIG. 1] A diagram illustrating the configuration of a first example of the mobile communication system according to a first preferred embodiment of the present invention.
[FIG. 2] A diagram illustrating the configuration of a second example of the mobile communication system according to the first preferred embodiment of the present invention.
[FIG. 3] A diagram illustrating the configuration of a third example of the mobile communication system according to the first preferred embodiment of the present invention.
[FIG. 4] A diagram illustrating the configuration of a fourth example of the mobile communication system according to the first preferred embodiment of the present invention.
[FIG. 5] A diagram illustrating the configuration of a fifth example of the mobile communication system according to the first preferred embodiment of the present invention.
[FIG. 6] A diagram illustrating the configuration of a sixth example of the mobile communication system according to the first preferred embodiment of the present invention.
[FIG. 7] A diagram illustrating the configuration of a seventh example of the mobile communication system according to the first preferred embodiment of the present invention.
[FIG. 8] A diagram illustrating the configuration of an eighth example of the mobile communication system according to the first preferred embodiment of the present invention.
[FIG. 9] A diagram illustrating the configuration of a ninth example of the mobile communication system according to the first preferred embodiment of the present invention.
[FIG. 10] A diagram illustrating the configuration of a tenth example of the mobile communication system according to the first preferred embodiment of the present invention.
[FIG. 11] A block diagram illustrating the configuration of a base station according to the first preferred embodiment of the present invention.
[FIG. 12] A block diagram illustrating the configuration of a mobile station according to the first preferred embodiment of the present invention.
[FIG. 13] A diagram illustrating the structure of a data format of a control channel of a physical channel according to the first preferred embodiment of the present invention.
[FIG. 14] A block diagram illustrating the configuration of a base station host apparatus (network) according to the first preferred embodiment of the present invention.
[FIG. 15] A diagram illustrating a method for estimating the direction of movement of a mobile station on the basis of historical information.
[FIG. 16] A diagram illustrating handover failure history.
[FIG. 17] A diagram illustrating a method of obtaining a log of historical information.
[FIG. 18] A diagram illustrating a method of obtaining a log of historical information.
[FIG. 19] A diagram illustrating a method of calculating a rapid reduction of reception power on the basis of moving speed and reception power reduction.
[FIG. 20] A diagram illustrating increasing/ decreasing of the number of antenna branches of a base station.
[FIG. 21] A block diagram illustrating the configuration of a base station that increases/ decreases the number of antenna branches on the basis of historical information about a mobile station.
[FIG. 22] A diagram illustrating an example of a program for realizing the judgment operation in the number-of-antenna-branches determining block.
[FIG. 23] A diagram illustrating the configuration of a base station host apparatus that provides instructions to base stations to increase/ decrease the number of antenna branches on the basis of historical information about mobile stations.
[FIG. 24] A diagram illustrating the correspondence between reception level and the number of antenna branches selected in a base station.
[FIG. 25] A diagram illustrating a condition in which, on the basis of transmission rates, the handover destination is selected to a base station with the largest transmission rate.
[FIG. 26] A diagram illustrating a condition in which a handover destination base station is selected on the basis of the numbers of unoccupied resources,
[FIG. 27] A diagram illustrating how handover or beam control is performed as the communication capacity increases/ decreases,
[FIG. 28] A diagram illustrating a method of calculating transmission rate.
[FIG. 29] A diagram showing another example of a transmission rate calculating method.
[FIG. 30] A diagram illustrating a screen of a mobile station through which a user enters the environment where the mobile station is placed.
[FIG. 31] A diagram illustrating communication areas of base stations when a mobile station is in a river.
[FIG. 32] A diagram illustrating the configuration of a mobile communication system in which condition notifying servers input historical information to a mobile station.
[FIG. 33] A block diagram illustrating the configuration of a condition notifying server.
[FIG. 34] A block diagram illustrating the configuration of a mobile station that receives information from condition notifying servers and handles it as historical information.
[FIG. 35] A diagram illustrating a mobile communication system in which the historical information provided to the base station side includes high-speed of movement of a mobile station.
[FIG. 36] A diagram illustrating a method of estimating moving speed by detecting notches of fading.
[FIG. 37] A diagram illustrating a method of detecting notches of fading.
[FIG. 38] A diagram illustrating an example of a table used to judge whether the calculated moving speed is high or not.
[FIG. 39] A diagram illustrating a mobile communication system according to a second preferred embodiment of the present invention.
[FIG. 40] A diagram illustrating channel coding in which a mobile station couples data received from base stations into one data format, in the mobile communication system of the second preferred embodiment of the present invention.
[FIG. 41] A diagram illustrating a mobile communication system according to a third preferred embodiment of the present invention.
[FIG. 42] A diagram illustrating operations of a base station in the mobile communication system of the third preferred embodiment of the present invention.
[FIG. 43] A diagram illustrating the configuration of a base station in the mobile communication system of the third preferred embodiment of the present invention.
[FIG. 44] A diagram illustrating the configuration of a mobile station in the mobile communication system of the third preferred embodiment of the present invention.

### Best Mode For Carrying out the Invention

### (A. First Preferred Embodiment)

The mobile communication system according to a first preferred embodiment of the present invention is characterized in that a mobile station obtains historical information such as reception level in communications with base stations and provides the historical information to base stations, whereby the base station or base station host apparatus (network) side can more accurately select handover destinations and perform more accurate beam control, where various examples are possible. Such examples will be described below.

### (A-1. First Example)

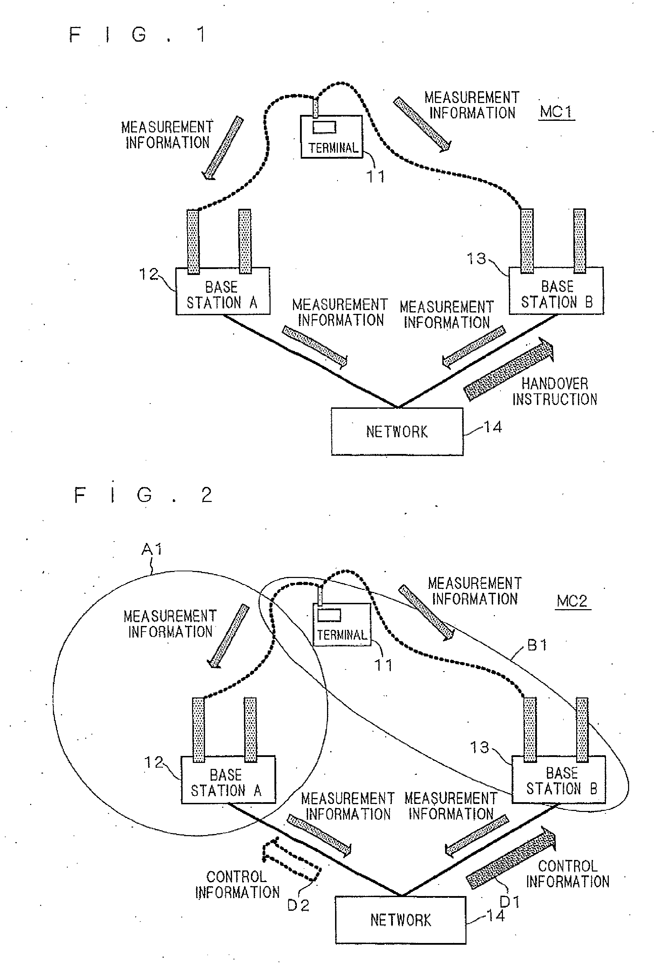

FIG. 1 illustrates the configuration of a mobile communication system MC1 according to a first example.

As shown in FIG. 1, the mobile communication system MC1 has a network configuration in which a plurality of base stations, such as a base station 12 and a base station 13, are connected to a base station host apparatus 14 including base station control equipment and core network.

In FIG. 1, a mobile station (= a terminal) 11 is present between the communication area of the base station 12 (hereinafter referred to as base station A) and the communication area of the base station 13 (hereinafter referred to as base station B).

Now, the base station A can perform wireless transmission with the mobile station 11, and can also perform wired or wireless data transmission with the base station host apparatus 14, and the base station B also has the same functions as the base station A.

In the case of W-CDMA (Wideband Code Division Multiple Access), for example, when the mobile station 11 is in a position included in both of the communication area of the base station A and the communication area of the base station B and is trying to perform a handover between the two base stations, a soft handover is conducted and the single mobile station is in connection simultaneously with the two base stations, for example. In the case of a scheme using hard handover, it is possibly in connection with either the base station A or the base station B, or it may be repeatedly performing the operations of making the connection with the base station A and breaking the connection with the base station B, and breaking the connection with the base station A and making the connection with the base station B.

Next, the operation of the mobile communication system MC1 will be described.
The mobile station 11 is simultaneously or alternately performing wireless transmission/ reception with the base station A and the base station B. In this case, the mobile station 11 is configured such that it receives downlink data from the two base stations and performs demodulation and decoding, and to thereby measure characteristics about quality, such as the reception level of data sent from the base stations, CIR (estimated transmission path characteristic), SIR (Signal-to-Interference Ratio), etc., and to capture the characteristics as quality information.

Then, the mobile station 11 is configured such that, when the obtained data quality information is about data from the base station A, it provides the information to the base station A, and when the obtained data quality information is about data from the base station B, it provides the information to the base station B.

The base station A and the base station B are configured to provide the quality information, sent from the mobile station 11, to the base station host apparatus 14 as historical information about the mobile station 11. Also, the base station host apparatus 14 is configured to then compare the pieces of quality information sent from the two base stations, select the base station with better quality and instruct it to communicate with the mobile station 11 (handover instruction), and to instruct the base station with inferior quality not to communicate with the mobile station 11.

Alternatively, the mobile station 11 may be configured such that it provides the base station A with both of the quality information about data from the base station A and the quality information about data from the base station B, as historical information about the mobile station 11. Alternatively, it may be configured such that it provides the base station B with both of the quality information about data from the base station A and the quality information about data from the base station B, as historical information.

Conventionally, the base station side switched handover destinations by referring to information such as power value of data received from mobile stations, but the mobile communication system MC 1 takes the configuration described above and makes it possible to determine handover destinations and handover timing by also considering history (reception information) on the mobile station side, whereby the accuracy of handover is enhanced and efficient handover is realized.

### (A-2. Second Example)

FIG. 2 illustrates the configuration of a mobile communication system MC2 according to a second example. Similarly to that in FIG. 1, a mobile station 11 is in a place where it is included in both of the communication area of the base station A and the communication area of the base station B, and the mobile station 11 is trying to perform a handover between the two base stations.

In the mobile communication system MC2 shown in FIG. 2, a base station or base station host apparatus 14 does not specify handover destinations on the basis of historical information from the mobile station 11; the base station host apparatus 14 is configured such that, on the basis of historical information from the mobile station 11, it provides a certain base station with control information to direct communication beam to the mobile station 11 so as to include the mobile station 11 in the communication area, and it provides another base station with control information not to direct communication beam to the mobile station 11 so as not to include the mobile station 11 in the communication area.

FIG. 2 shows an example in which the base station B is provided with control information D1 to direct communication beam to the mobile station 11 so as to include the mobile station 11 in the communication area, and the base station A is provided with control information D2 not to direct communication beam to the mobile station 11 so as not to include the mobile station 11 in the communication area.

The base station B provided with the control information D1 performs control to direct communication beam to the mobile station 11 so that the mobile station 11 is included in the communication area B1 of the base station B. On the other hand, the base station A provided with the control information D2 does not direct communication beam to the mobile station 11 and therefore the mobile station 11 is excluded out of the communication area A1 of the base station A.

In this way, in which base station's communication area the mobile station 11 should be included is determined on the basis of historical information from the mobile station 11, whereby dead spots of communication waves can be precisely eliminated.

"Beam control", like directing beam, means weighting processing to intensively increase transmission power to the target mobile station, or to increase reception power from the target mobile station, by using signal processing techniques such as adaptive array.

Also, the base stations may measure the quality of data transmitted from the mobile station 11 and provide the results to the base station host apparatus 14 together with the historical information from the mobile station 11, in which case the information can be used to determine of which base station's communication area the mobile station should be included.

### (A-3. Third Example)

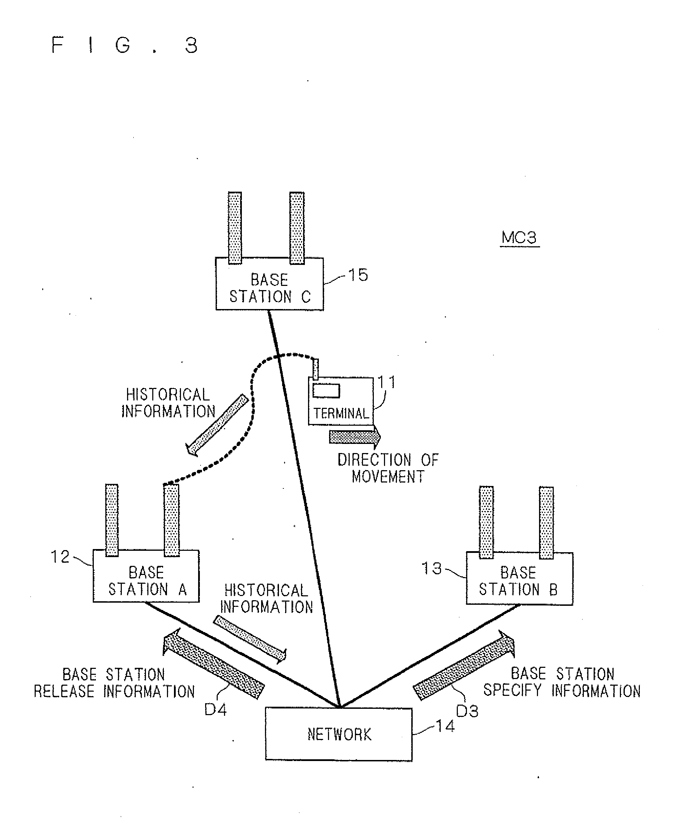

FIG. 3 illustrates the configuration of a mobile communication system MC3 according to a third example.
In the mobile communication system MC3 shown in FIG. 3, not only the base station 12 and the base station 13 but also a base station 15 (hereinafter referred to as base station C) is connected to the base station host apparatus 14. The mobile station 11 is configured to notify base stations of the direction of movement, as behavior information, of the mobile station 11 as its historical information. The mobile station 11 is moving toward the base station B, and it is currently in the communication area of the base station A and communicating with the base station A. However, the mobile station 11 is also reaching the communication area of the base station B and the communication area of the base station C, and it has a history that it has just slightly communicated with the two base stations.

The mobile station 11 keeps the history, and provides the historical information to the base station A. The base station A provides the historical information to the base station host apparatus 14. The base station host apparatus 14 is configured to process the historical information and obtain the direction of movement of the mobile station 11, and to give instructions to effect a handover from the base station A to the base station B according to the direction of movement.

That is to say, the base station host apparatus 14 specifies the base station B as the handover destination, and provides base station specify information D3 to the base station B and base station release information D4 to the base station A to release the communication with the mobile station 11. Receiving the base station specify information D3, the base station B operates to direct communication beam to the mobile station 11; the base station A, receiving the base station release information D3, operates to cease directing the communication beam to the mobile station 11. Instead of providing control to direct communication beam, the base station B receiving the base station specify information D3 may make resource settings for communication with the mobile station 11, with macro notification from the application, for example, and the base station A receiving the base station release information D4 may forcedly perform operations to release resources for communication with the mobile station 11, with macro notification from the application, for example.

Alternatively, the base station A may be configured such that, when receiving the historical information, it processes the historical information to obtain the direction of movement, and performs operations for a handover to the base station B.

That is to say, the base station A specifies the base station B as the handover destination, and gives base station specify information D3 to the base station B. Receiving the base station specify information D3, the base station B operates to direct communication beam to the mobile station 11. Instead of performing control to direct communication beam, the base station B receiving the base station specify information D3 may forcedly make resource settings for communication with the mobile station 11, with macro notification from the application, for example.

Thus, when the direction of movement of the mobile station 11 is obtained from its historical information and handover instructions are thus given, the process only involves one handover operation to the base station B; this provides the effect to achieve more efficient handover than conventional schemes in which handover is repeated.

That is to say, the mobile station 11 would possibly be handed over to the base station C when the direction of movement of the mobile station 11 is not considered; it would be handed over twice, i.e. once from the base station A to the base station C and then from the base station C to the base station B, but it is handed over only once when the direction of movement is considered.

In the description above, on the basis of historical information, the base station side (base station or base station host apparatus) specifies the handover destination base station; instead of specifying handover destination, as shown with the mobile communication system MC2 shown in FIG. 2, the base station host apparatus 14 may apply beam control to the base stations A and B such that the mobile station 11 is included in the communication area of the base station B and the mobile station 11 is not included in the communication area of the base station A.

### (A-4. Fourth Example)

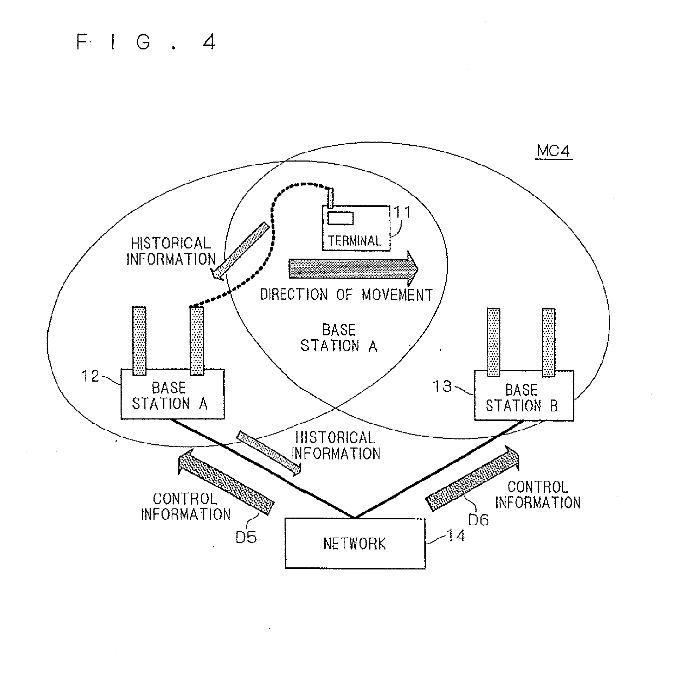

FIG. 4 illustrates the configuration of a mobile communication system MC4 according to a fourth example.

In the mobile communication system MC4 shown in FIG. 4, the mobile station 11 is configured to notify base stations of the speed of movement, as behavior information, of the mobile station 11 as its historical information. The mobile station 11 is moving from the base station A toward the base station B at high speed, and the mobile station 11 is in communication only with the base station A.

The mobile station 11 provides information about the speed of movement to the base station A.
The base station A gives the historical information to the base station host apparatus 14. The base station host apparatus 14 is configured such that, when receiving the historical information, it provides a control signal D5 to the base station A to perform beam control so as not to exclude the mobile station 11 from the communication area A1 as long as possible. On the other hand, it provides a control signal D6 to the base station B to perform beam control such that the mobile station 11 enters the communication area B1. Also, a base station or the base station host apparatus 14 gives instructions such that the mobile station 11 is handed over early from the base station A to the base station B.

Alternatively, the system may be configured such that the base station A processes the historical information from the mobile station 11 and performs beam control such that the mobile station 11 is not excluded from the communication area A1 as long as possible, and the base station A also instructs the base station B to perform beam control such that the mobile station 11 enters the communication area B1.

Thus, the base station A directs communication beam toward the mobile station 11 such that it will not go out of the area, and the base station B is instructed to soon effect a handover, whereby a sufficient time is ensured for handover even when the mobile station 11 is moving at high speed.

In this way, when the mobile station is moving at high speed, the mobile station 11 notifies the base station side of that fact, whereby efficient handover is achieved.

Also, directing beams both from the base station A and the base station B to the mobile station 11 offers the effect to reduce dead spots, in addition to facilitating handover.

The description above illustrated that the mobile station 11 is moving from the base station A toward the base station B at high speed; in the case of soft handover where a plurality of base stations are communicating with the mobile station, for example, all base stations communicating with the mobile station can know the direction of presence of the mobile station with an algorithm for radio wave arrival direction estimation, for example. Then, the base stations can perform control to direct beam to the direction of arrival of the radio waves, and they can direct beam to the mobile station even when they are not provided with information about the direction of movement. The control to direct beam can thus be achieved even when the mobile station 11 does not provide moving direction information and positional information.

However, when information about the direction of movement is provided, the base stations can know whether or not the mobile station is moving toward themselves (base stations); then, when the mobile station is not moving toward themselves, they do not have to direct beams, and they do not have to perform beam control. Accordingly, information about the direction of movement can be included in the historical information together with the speed of movement. Then, only limited base stations direct beam to the mobile station, which reduces the amount of processing and saves power, and minimizes the number of handovers.

Positional information, as well as information about the direction of movement, can be employed to allow base stations to know whether the mobile station is moving toward themselves (base stations); when the mobile station is not moving toward a base station, it does not have to direct beam, and does not need beam control. Accordingly, positional information may be included in the historical information as well as the speed of movement.

### (A-5. Fifth Example)

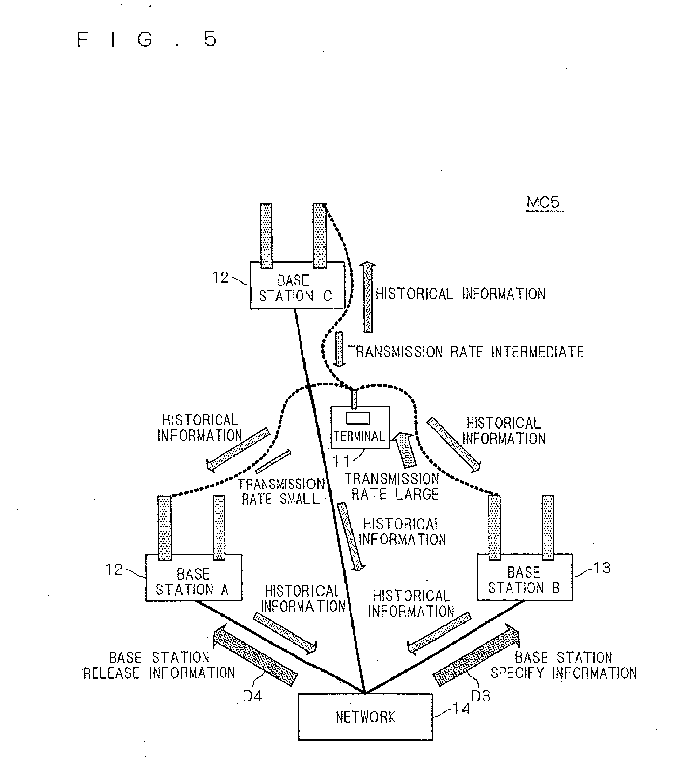

FIG. 5 illustrates the configuration of a mobile communication system MC5 according to a fifth example.

In the mobile communication system MC5 shown in FIG. 5, not only the base station 12 and the base station 13 but also a base station 15 (base station C) is connected to the base station host apparatus 14. The mobile station 11 is configured to measure the transmission rates of data received at the mobile station 11 from the base stations A to C and provide the information about communication condition as historical information to the base stations. The mobile station 11 is communicating simultaneously with the three base stations A to C; or it is communicating only with the base station A and it has a history that it communicated also with the base station B and the base station C in the not far past (for example, a threshold about time is provided and a time below that threshold is defined as "not far past"), since it is also close to the communication areas of the base station B and the base station C.

When the mobile station 11 is simultaneously communicating with the three base stations A to C, the mobile station 11 provides the individual base stations with the results of measurement of the transmission rates of data respectively received from the base stations; alternatively, the results of measurement of the transmission rates of data from the three base stations are all provided to a particular one base station. Alternatively, the results of measurement of the transmission rates of data from the three base stations may be all provided to all of the base stations A to C.

### (A-5-1. When Communicating Only with One Base Station)

When the mobile station 11 is communicating only with the base station A, the mobile station 11 provides the base station A with the result of measurement of the data transmission rate in the current communication with the base station A and also with all results of measurement of the data transmission rates in the past communications with the base station B or C; alternatively, the information about the results of measurement of transmission rates is provided to all of the base stations A to C as historical information.

Now, as shown in FIG. 5, the transmission rate with the base station A is small, the transmission rate with the base station B is large, and the transmission rate with the base station C is intermediate between those with the base stations A and B.

When the base station A, or the base stations A to C, obtained the information about transmission rate measurement as historical information, the base station A or the base stations A to C provide the historical information to the base station host apparatus 14. The base station host apparatus 14 is configured to give instructions for a handover from the base station A to the base station B.

That is to say, the base station host apparatus 14 specifies the base station B as the handover destination, and gives base station specify information D3 to the base station B and gives base station release information D4 to the base station A to release the communication with the mobile station 11. Receiving the base station specify information D3, the base station B performs resource settings for communication with the mobile station 11, with macro notification from the application, for example, and the base station A receiving the base station release information D4 forcedly performs operations to release resources for the communication with the mobile station 11, with macro notification from the application, for example.

Thus, only with one execution, the mobile station 11 can be handed over to the base station that is expected to offer a larger transmission rate, which enhances handover efficiency and efficiency of the entire communication.

Alternatively, the base station A, receiving the historical information, may be configured to perform operations for a handover to the base station B on the basis of the historical information. Also, a base station other than the base station A may be configured to give instructions for a handover from the base station A to the base station B.

The scheme is effective not only when the base station host apparatus 14 specifies the handover destination, but also when the beams of base stations are controlled to reduce dead spots.

In this case, on the basis of the information about transmission rates from the mobile station 11, the beam of the base station B is controlled to be directed to the mobile station 11 to further stabilize the communication between the mobile station 11 and the base station B offering the largest transmission rate.

On the other hand, the base station A offering a small transmission rate is controlled such that it does not direct beam to the mobile station 11, or no beam directing control is performed. The same is true for the base station C.

Thus, as a result, the mobile station 11 can be quickly handed over from the base station A to the base station B to perform communication at the largest transmission rate.

Such beam control instructions may be given by the individual base stations A to C, or by the base station host apparatus 14. Thus, the quality of communication between the base station B and mobile station is further enhanced and the transmission rate is also increased.

### (A-5-2. When Communicating with All Base Stations)

Similarly to the description above, also when the mobile station 11 is in communication simultaneously with all base stations A to C, the base stations A to C, or the base station host apparatus 14, is provided with the information about transmission rates from the mobile station 11 and performs beam control or specifies the handover destination.

In this case, when the beam control and the specifying of the handover destination are conducted in such a way as to allow the mobile station to communicate only with the base station B and not with the base stations A and C, the resources of the base stations A and C can be released to facilitate efficient use of resources. However, this scheme is effective when the communications between the base stations A to C and the mobile station 11 are all exchanging same data.

When the base station A and the mobile station 11, the base station B and the mobile station 11, and the base station C and the mobile station 11, are all sending/ receiving different independent data (or data that will be combined into one piece of data after received), all base stations perform control to direct beams to the mobile station 11. This is because larger amounts of data can be sent/ received when the communication is connected with a larger number of base stations.

### (A-6. Sixth Example)

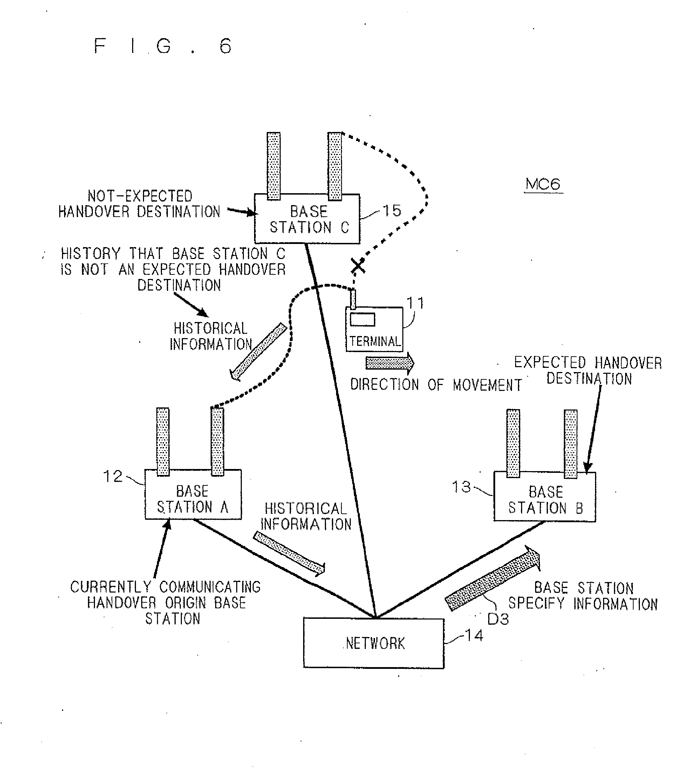

FIG. 6 illustrates the configuration of a mobile communication system MC6 according to a sixth example.
In the mobile communication system MC6 shown in FIG. 6, not only the base station 12 and base station 13 but also a base station 15 (base station C) is connected to the base station host apparatus 14. The mobile station 11 is configured to provide base stations with a handover failure history as historical information indicating that a base station is not an expected handover destination. The mobile station 11 is in communication with the base station A, and is moving from within the communication area of the base station A toward the communication area of the base station B. In the course of movement, the mobile station 11 enters not only the communication area of the base station B but also the communication area of the base station C. The mobile station 11 tried to perform handover to the base station C, but it failed to handover some times, and it has judged that the base station C was inappropriate as a handover destination.

In such a case, the mobile station 11 is configured to provide the communicating base station A with information as historical information indicating that the base station C is a not-expected handover destination.

Receiving the historical information indicating a not-expected handover destination, the base station A gives the historical information to the base station host apparatus 14. The base station host apparatus 14 is configured to give instructions to effect a handover not to the base station C as a not-expected handover destination but to the base station B for which not-expected handover destination information was not received.

That is to say, the base station host apparatus 14 specifies the base station B as the handover destination base station, and gives base station specify information D3 to the base station B, and gives base station release information D4 to the base station A to release the communication with the mobile station 11. Receiving the base station specify information D3, the base station B performs resource settings for communication with the mobile station 11, with macro notification from the application, for example, and the base station A receiving the base station release information D4 forcedly performs operations to release the resources for communication with the mobile station 11, with macro notification from the application, for example.

Alternatively, the base station A, who received the historical information, may perform handover operations to the base station B on the basis of the historical information.

Using such historical information makes it possible to reduce the number of handovers and to facilitate efficient handover.

That is to say, when the mobile station 11 does not provide the not-expected handover destination information to the base station side, then the mobile station 11 might be handed over twice, i.e. from the base station A to the base station C, and next from the base station C to the base station B as it further moves toward the base station B; however, it is handed over only once when the scheme of this example is adopted.

Now, whether a not-expected handover destination or not is determined according to whether handover to the base station has failed a predetermined number of times. For example, when the criterion of judgment is "twice", and when the mobile station 11 is moving, as shown in FIG. 6, from within the communication area of the base station A into the communication area of the base station B and reaches the communication area of the base station C in the course of movement, the mobile station 11 judges the base station C as a not-expected handover destination if an attempt for a handover to the base station C failed, e.g. it was connected but soon disconnected, twice.

Then, the information as a not-expected handover destination is stored in the mobile station 11 for a given period, and it is provided to the communicating base station A as historical information. However, when the base station C is the only candidate for handover destination, handover is made to the base station C.

Handover failures can be reduced when base stations that are even slightly more likely to succeed in handover are thus specified as handover destinations.

### (A-7. Seventh Example)

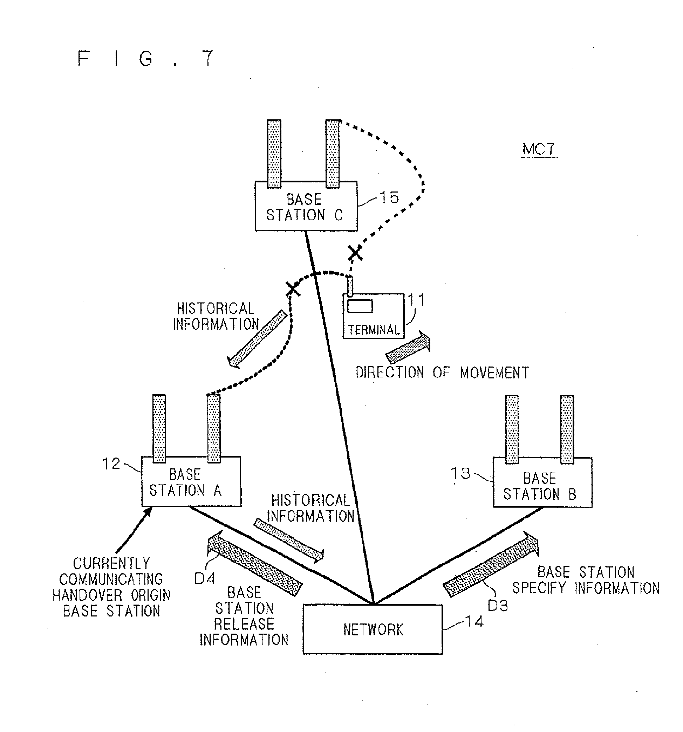

FIG. 7 illustrates the configuration of a mobile communication system MC7 according to a seventh example.
In the mobile communication system MC7 shown in FIG. 7, not only the base station 12 and base station 13 but also a base station 15 (base station C) is connected to the base station host apparatus 14. The mobile station 11 is configured to provide a handover failure history to base stations as historical information. In the example of FIG. 7, the handover failure history further includes information indicating that the communication with the connected base station was also disconnected. Now, the mobile station 11 is communicating with the base station A, and is moving in the middle between the base station B and the base station C. Accordingly, it is reaching the communication areas of both of the base station C and the base station B, and it first tried to make a handover to the base station C, e.g. because the transmission power from the base station C was larger, but the communication was disconnected and the handover failed. Also, the communication with the base station A, as the handover origin, was also disconnected.

In such a case, the mobile station 11 stores, in itself for a given period, not only the information that it could not transfer to the communication with the base station C as the handover destination but also the information that the communication with the base station A as the handover origin was also broken and it could not return to the handover origin.

Then, when it is re-connected to some base station (the base station A in the example of FIG. 7), it gives the stored handover failure history as historical information to the reconnected base station A. The base station A provides the historical information to the base station host apparatus 14. The base station host apparatus 14 is configured such that, on the basis of the handover failure history, it gives instructions to hand over to the base station B, not to the base station C who failed in handover.

That is to say, the base station host apparatus 14 specifies the base station B as the handover destination base station, and provides base station specify information D3 to the base station B, and provides base station release information D4, for releasing communication with the mobile station 11, to the base station A. Receiving the base station specify information D3, the base station B performs resource settings for communication with the mobile station 11, with macro notification from the application, for example, and the base station A receiving the base station release information D4 forcedly performs operations to release the resources for the communication with the mobile station 11, with macro notification from the application, for example.

Alternatively, the base station A, who received historical information, may be configured to perform handover operations to the base station B on the basis of the historical information.

Thus, by using such historical information, the base station B who has no failure history is specified as the handover destination, and handover failures are reduced.

Alternatively, in placed of the configuration in which the base station host apparatus 14 specifies the base station B as the handover destination, the base stations B and C may voluntarily perform beam control (or the base station host apparatus 14 applies beam control to the base stations B and C) such that the base station B directs beam to the mobile station 11 and the base station C does not direct beam to the mobile station 11 (or it directs "null" to the mobile station 11), whereby the mobile station 11 is more likely to be handed over not to the base station C but to the base station B.

In this case, the mobile station 11 is more likely to be handed over to the base station B, than to the base station C that is likely to fail in handover, and handover failures are reduced; also, the shapes of the communication areas are varied so that the normal communication can be continued, and it substantially offers the effect to reduce dead spots.

In radio waves sent from antennas, or in the beam patterns of radio waves received at antennas, portions where the electric field strength of beam extremely falls are called "null", and "directing null" means to direct such a portion to the mobile station.

### (A-8. Eighth Example)

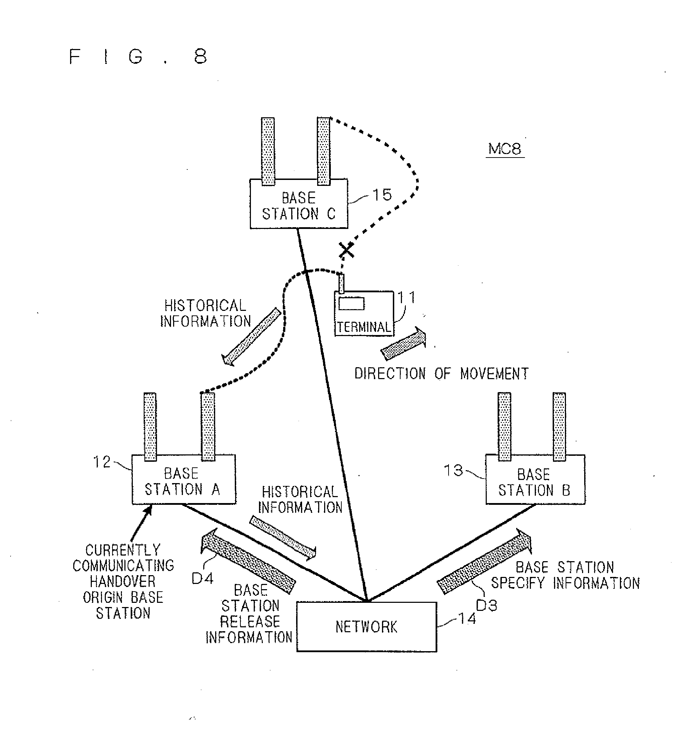

FIG. 8 illustrates the configuration of a mobile communication system MC8 according to an eighth example.
In the mobile communication system MC8, as in the mobile communication system MC7 described with FIG. 7, the mobile station 11 is configured to provide a handover failure history to base stations as historical information. In the example of FIG. 8, the handover failure history further includes information indicating that it failed to handover to the base station C and returned to the communication with the connected base station A (the communication with the base station A was continued). The mobile station 11 is communicating with the base station A, and is moving in the middle between the base station B and the base station C. Accordingly, the mobile station 11 is reaching the communication areas of both of the base station C and the base station B, and it tried to handover to the base station C in the past (within a given time period), because, e.g. the transmission power from the base station C was larger, but the communication was disconnected and the handover failed, and it is continuously communicating with the base station A.

In such a case, the mobile station 11 provides the base station A with the handover failure history as historical information indicating that it has failed to hand over to the base station C in the past and returned to the communication with the base station A. The base station A provides the historical information to the base station host apparatus 14. On the basis of the handover failure history, the base station host apparatus 14 gives instructions to effect a handover to the base station B, not to the base station C who has failed in handover.

Alternatively, the base station A, who received historical information, may be configured to perform handover operations to the base station B on the basis of the historical information.

Thus, by using such historical information, the base station B who has no failure history is specified as the handover destination, and handover failures are reduced.

Alternatively, in placed of the configuration in which the base station host apparatus 14 specifies the base station B as the handover destination, the base stations B and C may voluntarily perform beam control (or the base station host apparatus 14 applies beam control to the base stations B and C) such that the base station B directs beam to the mobile station 11 and the base station C does not direct beam to the mobile station 11 (or it directs "null" to the mobile station 11), whereby the mobile station 11 is more likely to be handed over not to the base station C but to the base station B.

In this case, the mobile station 11 is more likely to be handed over to the base station B, than to the base station C that is likely to fail in handover, and handover failures are reduced; also, the shapes of the communication areas are varied so that the normal communication can be continued, and it substantially offers the effect to contribute to the reduction of dead spots.

### (A-9. Ninth Example)

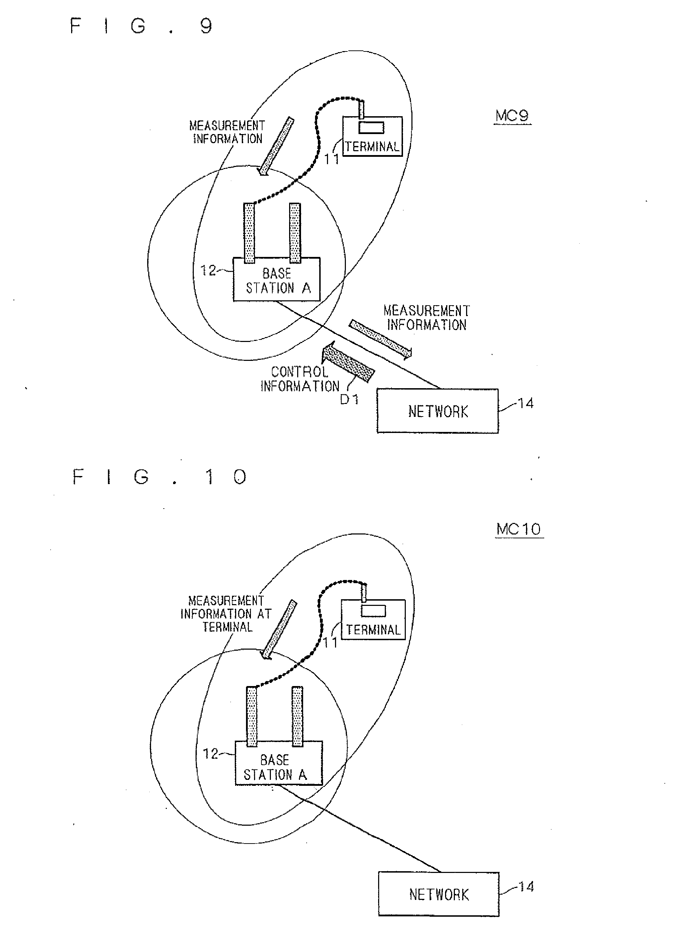

FIG. 9 illustrates the configuration of a mobile communication system MC9 according to a ninth example
In the mobile communication system MC9, a base station 12 (base station C) is connected to a base station host apparatus 14. The mobile station 11 is configured to measure the reception level of received data and provides the base station A with the measurement information as historical information about signal quality, e.g. about whether the reception level is good or bad.

The base station gives the historical information to the base station host apparatus 14. On the basis of the historical information, the base station host apparatus 14 provides control information D1 such that the base station A directs beam to the mobile station 11 to include the mobile station 11 in the communication area.

On the basis of the control information D1, the base station A raises the reception level by directing beam to the mobile station 11.

Thus, the base station A can more accurately direct beam to the mobile station 11 by using the reception level measurement information at the mobile station 11 as historical information, whereby the mobile station 11 can more stably stay in the communication area of the base station A.

### (A-10. Tenth Example)

FIG. 10 illustrates the configuration of a mobile communication system MC10 according to a tenth example.
In the mobile communication system MC10, as in the mobile communication system MC9 described with FIG. 9, measurement information about the reception level at the mobile station 11 is used as historical information; however, in the mobile communication system MC10, the base station A is configured to judge the historical information by itself and direct beam to the mobile station 11, while, in the mobile communication system MC9, the base station host apparatus 14 gives instructions to the base station A to direct beam to the mobile station 11.

Thus, the base station A itself makes the decision, and so the delay of time required by the communication from the base station A to the base station host apparatus 14 is eliminated, and the beam can be directed to the mobile station 11 more quickly than when the base station host apparatus 14 provides control.

### (A-11. Configuration of Base Stations)

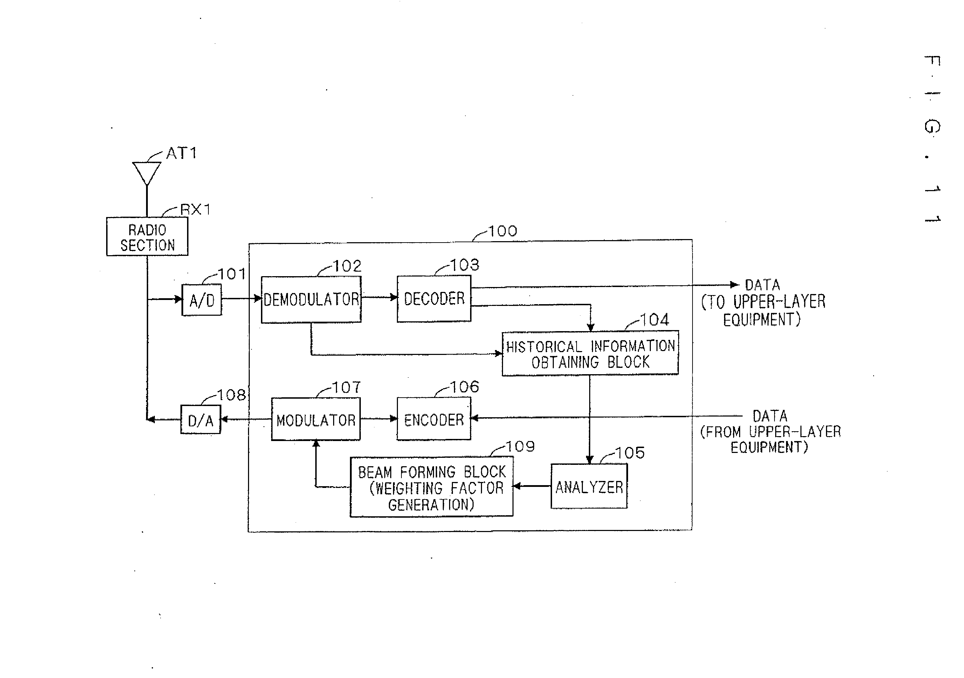

Next, referring to the block diagram of FIG. 11, the configuration of the base stations A to C used in the mobile communication systems MC1 to MC10 explained with FIGS. 1 to 10 will be described.

As shown in FIG. 11, the base station chiefly includes an antenna AT1 (antenna branch), a radio section RX1 for receiving and transmitting analog signal, an A/D converter 101, a D/A converter 108, and a data processor block 100.

The data processor block 100 includes a demodulator 102, a decoder 103, a historical information obtaining block 104, an analyzer 105, an encoder 106, a modulator 107, and a beam forming block 109.

For example, the historical information obtaining block 104 and the analyzer 105 are formed of CPU (Central Processing Unit), DSP (Digital Signal Processor), or FPGA (Field Programmable Gate Array), and the decoder 103, the encoder 106, and the beam forming block 109 are formed of DSP or FPGA, or both.

In the radio section RX1, analog data received at the antenna AT1 is down-converted from radio frequencies (around 2 GHz in the case of W-CDMA) to the baseband range (e.g. 16 MHz) to become a baseband signal, which is given to the A/D converter 101 and converted from analog data to digital data.

The digital data is demodulated in the demodulator 102 (which also performs OFDM (Orthogonal Frequency Division Multiplexing) demodulation using fast Fourier transform), and DPDCH (Dedicated Physical Data Channel) and DPCCH (Dedicated Physical Control Channel) are reproduced in the case of a physical channel (W-CDMA (3GPP TS25. 211).

In this process, one like a control channel (DPCCH in the case of W-CDMA) is multiplexed in the physical channel, and the historical information from the mobile station is contained in that channel. The historical information obtaining block 104 extracts that historical information, and the analyzer 105 specifies the historical information, e.g. by referring to a table. Then, the beam forming block 109 calculates weighting factors to be multiplied with data for individual antenna branches. The calculated weighting factors are multiplied in the modulator 107. The D/A converter 108 converts the data after multiplication into analog data, and the radio section RX1 up-converts the data, which is transmitted from the antenna AT1 at radio frequencies.

The method of calculating the weighting factors uses an algorithm such as LMS (Least Mean Square), RLS (Recursive Least Mean) as described in "Adaptive Signal Processing with Array Antennas (written by Nobuyoshi Kikuma and published from Kagaku Gijutsu Shuppan, Inc.), for example.

The weighting factors are used for beam control; for example, the intact calculated factors are employed to direct beam to the mobile station, and the weighting factors are invalidated (all "1") when not directing beam.

When historical information is contained not in the control channel of a physical channel (DPCCH in the case of W-CDMA) but in the transport channel after channel decoding (DTCH (Dedicated Traffic Channel), DCCH (Dedicated Control Channel) in the case of W-CDMA), the historical information obtaining block 104 extracts the historical information contained in the data decoded in the decoder 103, and the analyzer 105 specifies it.

After the historical information has been obtained, the data may be sent as messages to the base station host apparatus separately from data, or may be sent to the host apparatus in the form contained in data, in which case the historical information is extracted by a function corresponding to the historical information obtaining block in the host apparatus. In this case, the historical information about the mobile station is processed in the base station host apparatus.

The decoder 103 is a functional block that performs so-called L2 processing and channel decoding, and it applies upper-layer processing to demodulated data and provides it to the base station host apparatus or the historical information obtaining block 104.

"L2 processing" is processing in Layer 2. Specifically, it includes processing such as MAC (Media Access Control), RLC (Radio Link Control), PDCP (Packet Data Convergence Protocol) and so forth.

The L2 processing and channel decoding are not described in detail herein because they are conventional operations.

The encoder 106 is a functional block that performs L2 processing and channel coding, which applies L2 processing and channel coding to downlink data given from the base station host apparatus.

The modulator 107 modulates data encoded in the encoder 106, according to a modulation scheme such as QPSK (Quadrature Phase Shift Keying) or 16QAM (Quadrature Amplitude Modulation), or 64QAM.

In the processing in the modulator 107, when transmission data is branched to individual antenna branches, the weighting factors for individual branches calculated in the beam forming block 109 are multiplied for individual branches.

### (A-12. Configuration of Mobile Station)

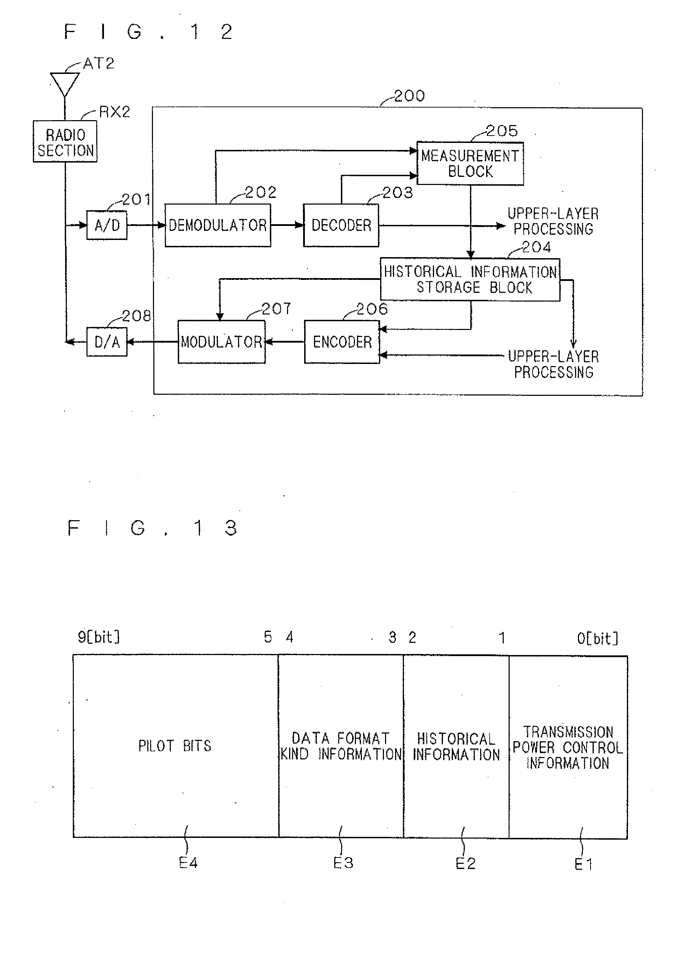

Next, Referring to the block diagram of FIG. 12, the configuration of the mobile station 11 used in the mobile communication systems MC1 to MC10 explained with FIGS. 1 to 10 will be described.

As shown in FIG. 12, the mobile station chiefly includes an antenna AT2, a radio section RX2 for receiving and transmitting analog signal, an A/D converter 201, a D/A converter 208, and a data processor block 200.

The data processor block 200 includes a demodulator 202, a decoder 203, a historical information storage block 204, a measurement block 205, an encoder 206, and a modulator 207.

The decoder 203 and the encoder 206 are formed of DSP or FPGA, or both, and the historical information storage block 204 is formed of memory.

Analog data received at the antenna AT2 is down-converted in the radio section RX2 from radio frequencies to the baseband range to become a baseband signal, and is given to the A/D converter 201 and converted from analog data to digital data.

The digital data is demodulated in the demodulator 202 (which also performs OFDM demodulation using fast Fourier transform), and the demodulated data undergoes channel decoding and upper-layer processing such as L2 processing in the decoder 203.

During demodulation in the demodulator 202, reception level, SIR etc. are measured.

Also, data is channel-decoded in the decoder 203, and, in the case of W-CDMA, for example, the number of OKs (no-error data) (or the number of NGs (error data)) of the results of CRC (Cyclic Redundancy Checking) attached to TBs (Transport Blocks) is counted. In the measurement block 205, the results of such measurement are converted to a historical information format (when reception level or SIR has a 8-bit width such as -127 to +127, data is divided into levels and contained in 2 bits, for example), which is stored in the historical information storage block 204. In the modulator 207, the historical information is inserted into the control channel of a physical channel (which corresponds to DPCCH in the case of W-CDMA).

FIG. 13 shows an example of the position of insertion of the historical information.
FIG. 13 illustrates a channel format where the historical information is inserted in the control channel of a physical channel. In FIG. 13, the ninth to fifth bits of 0-origin are a known sequence (Pilot bits) E4. The fourth to third bits are data format kind information (corresponding to TFCI in W-CDMA) E3. The second to first bits are the historical information E2. The zeroth bit is transmission power control information (which corresponds to TPC bit in W-CDMA) E1. In the 2-bit region for historical information, the information is defined for example as 00: reception level is low, 01: one handover failure with base station A, and so on. Defining the historical information with fewer bits reduces the loads in the analysis in base stations or base station host apparatus (network) and enables high-speed processing.

Alternatively, the historical information may be inserted in data in the encoder 206 or during upper-layer processing (which corresponds to DCCH, DTCH in W-CDMA).

The data in which historical information is inserted is given from the modulator 207 to the D/A converter 208 and converted to analog signal, up-converted in the radio section RX2, and transmitted from the antenna AT2 as a radio frequency signal.

While FIG. 12 shows a single antenna AT2, it may include multiple antennas. Multiple branches are required in the case of MIMO (Multiple Input Multiple Output).

### (A-13. Configuration of Base Station Host Apparatus)

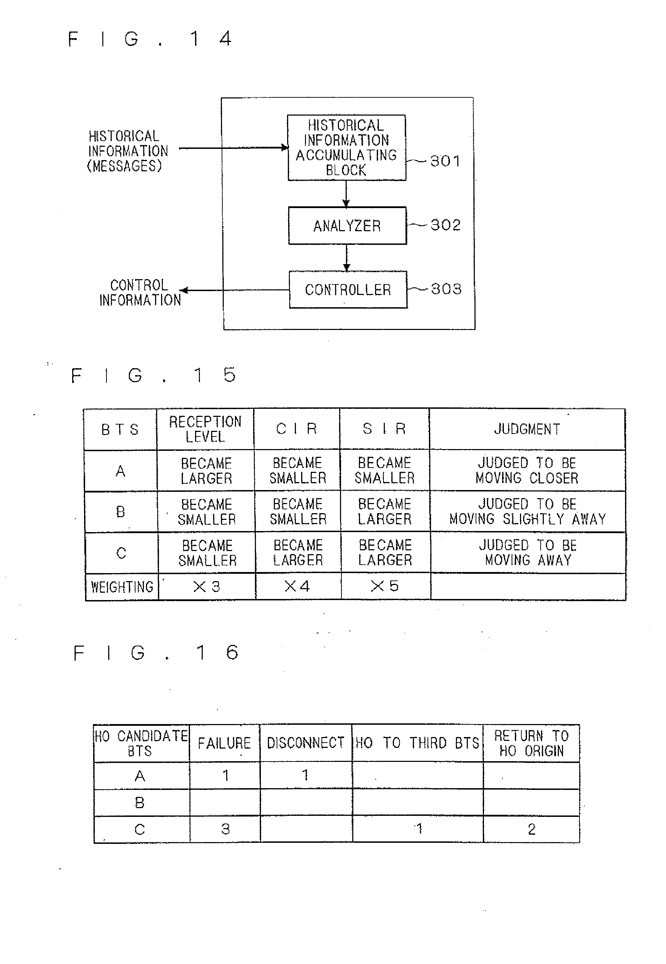

Next, referring to the block diagram of FIG. 14, the configuration of the base station host apparatus used in the mobile communication systems MC1 to MC10 explained with FIGS. 1 to 10 will be described.

As shown in FIG, 14, the base station host apparatus includes a historical information accumulating block 301, an analyzer 302, and a controller 303.

When the base station host apparatus receives historical information (measurement information) from a base station as messages or in the form contained in data, the historical information accumulating block 301 extracts and stores the historical information, and the analyzer 302 analyzes the contents of the historical information. Then, on the basis of the contents of the historical information, the controller 303 generates instructions for operations that the base station should perform.

For example, suppose that a mobile station is communicating with the base station A and can be handed over either to the base station B or the base station C; then, if it received a handover failure history about the base station C as historical information, then, on the basis of the historical information, it gives instructions to the base stations A to C to effect a handover to the base station B. This reduces the possibility of handover failures.

Or, for example, it gives instructions to the base station B for beam control to direct beam to the mobile station, and to the base station C for beam control not to direct beam to the mobile station. This reduces dead spots.

Or, for example, when the mobile station is communicating with the base station A and is also included in the communication areas of the base station B and the base station C, and when the reception level of the current communication with the base station A exhibits a low value, the reception level of past communication with the base station B exhibits a high value, and the reception level of past communication with the base station C exhibits a low value, then the base station host apparatus receives the historical information about individual base stations sent from the mobile station and gives instructions to the base stations A and B to effect a handover from the base station A to the base station B, or it gives instructions to the base station B to direct beam to the mobile station 11, and to the base station C not to direct beam to the mobile station (or direct null), so as to promote a handover from the base station A to the base station B.

This stabilizes the communication because the mobile station can be quickly handed over to the base station B that is capable of offering more stable communication. The handover can be achieved efficiently and dead spots are reduced.

### (A-14. Judgment Operation in Measurement Block of Mobile Station)

Next, referring to FIG. 15, an example of the judgment operation in the measurement block 205 of the mobile station explained with FIG. 12 will be described.

FIG. 15 shows a history table illustrating the judgment operation in the measurement block 205 where history information from the mobile station includes the direction of movement of the mobile station, which illustrates the judgment operation in the mobile communication system MC3 shown in FIG. 3.

The mobile station 11 holds histories about the base stations A, B and C, and it judges whether it is moving closer to or away from the base stations on the basis of variations of parameters such as reception level, CIR (estimated transmission path characteristic) and SIR.

The following information can be seen from the table shown in FIG. 15.
The reception level of the base station (shown as BTS) A became larger, its CIR became smaller, and its SIR became smaller.

The reception level of the base station B became smaller, CIR became smaller, and SIR became larger.

The reception level of the base station C became smaller, CIR became larger, and SIR became larger.

From the information, it is judged that the mobile station 11 is moving closer to the base station A, moving away from the base station C, and moving slightly away from the base station B. The mobile station 11 provides the information as historical information to the base station currently in communication.

When the history table is structured in two layers, like a short time-width (e.g. 1 ms) history and a long time-width (e.g. 1 second) history, the base stations can be informed of mobile station's short-cycle behavior and long-cycle behavior. For example, when the mobile station is moving in a serpentine way from the base station C toward the base station A, or when it goes out from behind a building, the SIR of the base station C temporarily becomes larger and the mobile station may be judged on the basis of the short-time history as if moving closer to the base station C; however, on the basis of the long-time history, SIR of the base station C is gradually becoming smaller and it shows that the mobile station is moving from the base station C toward the base station A.

Thus, by forming the table in a layered structure, influences of obstacles, as are often the case in mobile communications, can be considered in order to allow the base stations to more accurately know the behavior of the mobile station. The structure of the history table is not limited to 2-layered structure, but it can be 3-layered, and such a multi-layered structure allows the mobile station to inform base stations about its behavior in more detail.

By using multi-layered histories, base stations can also perform long-cycle and short-cycle power control. That is to say, it is possible to control +1 dB per 20 ms while controlling ±1. dB per 1 ms (control to vary power transmitted from the base station to the mobile station and control in which the base station raises and lowers power transmitted from the mobile station to the base station). This enables radio communications to keep more precise quality.

Thus, generating historical information in a table reduces circuit scale, the amount of memory, and the amount of processing. The bottom section in the table of FIG. 15 shows an example of weightings for individual parameters, where 3 is multiplied for reception level, 4 for CIR, and 5 for SIR.

CIR indicates the degree of signal distortion in radio transmission. It is obtained by calculating distortion on the basis of known sequence data sent/received between mobile and base stations, for example.

For example, with a know sequence 1+0×j, 1+0×j, 1+0×j, 1+0×j (j: complex number, represented in the form I component + Q component × j), when the base station sends out downlink data and the mobile station receives the data through radio transmission path and extracts that known sequence data as 1.2+0.3×j, 1.1+0.5×j, 0.9+0.3xj, 1.4+0.2×j, then the mean is 1.15+0.325xj and this is the degree of distortion from 1+0×j.

SIR is the ratio between signal power and interference power. For example, it can be obtained by using known sequence data as described above and checking its variations. Specifically, it can be obtained by obtaining the scattering of received known sequence data as the interference level, and obtaining a sum of "the square of sum of real parts (I components)" and "the square of sum of imaginary parts (Q components)" of the received known sequence data as the signal level, and calculating signal level ÷ interference level.

Another example of the judgment operation in the measurement block 205 of the mobile station will be described referring to FIG. 16.
FIG. 16 shows a table illustrating the judgment operation in the measurement block 205 where history information from the mobile station is mobile station's handover failure history, and it illustrates the judgment operation in the mobile communication systems MC6 to MC8 described with FIGS. 6 to 8.

The mobile station 11 is in the service areas of the three base stations A, B and C, and the mobile station 11 is currently communicating with the base station A.

In the table of FIG. 16, handover is shown as "HO", and for individual base stations the table shows the number of HO failures, the number of communication disconnections, the number of HOs to third BTS, and the number of returns to HO origin.

In FIG. 16, "disconnect: 1" means that a handover to another base station failed once and the current communication with a base station was disconnected. The column "failure" shows the total number of failures, and the failure history in this case is "1".

Also, "HO to third BTS" means that a handover was made to a not-expected third base station.

Also, "return to HO origin" means that a handover to a handover destination could not be achieved and returned to the communication with the originally communicating base station.

As shown in FIG. 16, for the base station C, the section "HO to third BTS" shows a history "1" and the section "return to HO origin" shows a history "2". This means that the mobile station 11 was handed over once to the not-expected handover destination base station C, and that it failed to hand over to the base station C twice and returned to the communication with the original base station A. The failure history is "3" in this case.

The base station B has no handover failure history, though the mobile station is in its communication area. This can be effective information indicating that, when the mobile station moves from the base station A toward the base stations B and C, it should be handed over not to the base station C but to the base station B.

With this history, a base station or base station host apparatus gives instructions to the base station B to direct the beam to the mobile station 11. The mobile station 11 can thus be efficiently handed over to the base station B that is less likely to fail to establish a handover than other base stations.

As to the history, the three factors in the table may be associated with values and sent to base stations, or not the factors but only the number of failures for each base station may be associated with value and sent to base stations.

### (A-15. Another Example of Usage of Historical Information)

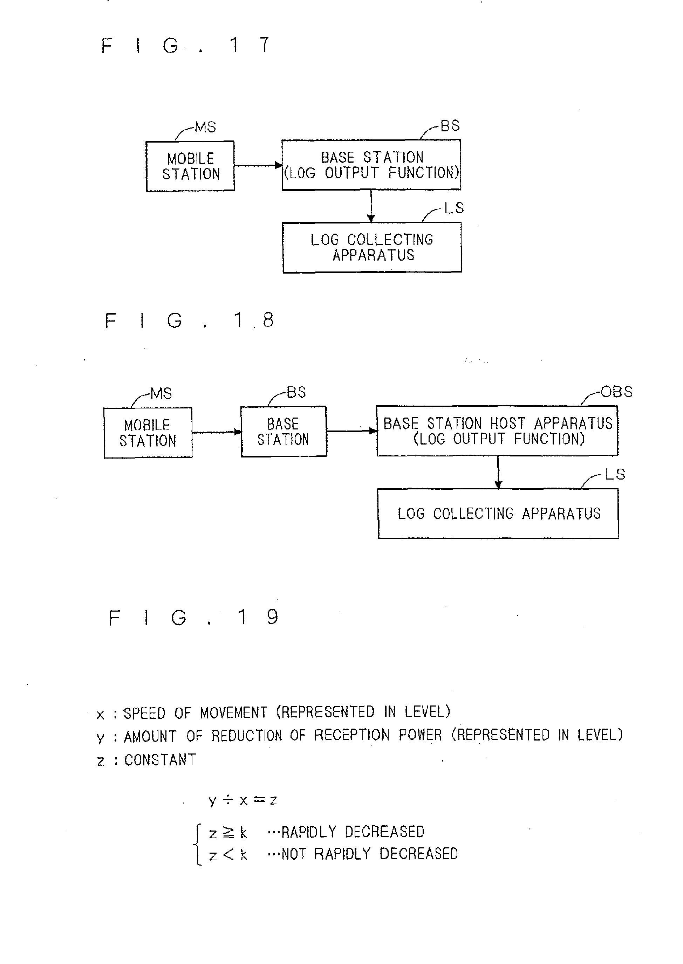

The description above has illustrated configurations in which historical information from the mobile station is employed to select a handover destination or to perform beam control, but the historical information may be employed to install base stations, where historical information from the mobile station is employed to find dead spots and install base stations there (or to take measures such that the radio waves from existing base stations reach there). A configuration for this purpose will be described referring to FIG. 17.

As shown in FIG. 17, a base station BS has a log output function and it outputs historical information sent from a mobile station MS as a log.

The mobile station MS receives data from the base station BS and sends historical information indicating, e.g. reception power is low, to the base station. The base station BS receives it and outputs it as a log.

The log outputted from the base station BS is collected by a separately provided log collecting apparatus LS, and dead spots can be reduced by raising the transmission power of an existing base station to raise the reception power at the mobile station. Also, the collected log can be employed to find dead spots and install new base stations.

Also, FIG. 18 shows a configuration in which a base station host apparatus OBS is equipped with a log output function, where the base station host apparatus OBS receives history information from the mobile station MS via the base station BS and outputs it as a log.

In this case, the log outputted from the base station host apparatus OBS is collected by a separately provided log collecting apparatus LS, and dead spots can be reduced by raising the transmission power of an existing base station to raise the reception power at the mobile station. Also, the collected log can be employed to find dead spots and install new base stations.

The operation of collecting logs is thus performed not for each base station BS but for each base station host apparatus OBS that manages base stations BS, and the user as an analyzer can save time to collect logs.

The log output function provided in the base station BS and the base station host apparatus OBS can be realized with a configuration in which log output circuitry is provided in FPGA and historical information is outputted to a certain connector of the base station BS and base station host apparatus OBS, for example. In this case, logs are sent to the log collecting apparatus LS from the connector through a cable.

The log collecting apparatus LS can be embodied by providing a personal computer with a storage area, such as a hard disk with large storage capacity or a memory with giga-byte class large storage capacity, and it has a system in which log information outputted from the connector is stored in the storage area as a log collecting button is touched on GUI (Graphical User Interface) in the display.

### (A-16. Example of Usage of Reception Level)

The description above has illustrated configurations in which the reception power (reception level) that the mobile station receives from base stations is employed as historical information from the mobile station in order to select handover destinations or to perform beam control, but the reception level may be employed not alone but in combination with information about the mobile station's moving speed.

FIG. 19 shows an example in which the reception level at the mobile station and information about the speed of movement of the mobile station are employed in combination, and FIG. 19 shows an expression for calculating the reduction of reception level with respect to the speed of movement of the mobile station.

In FIG. 19, x denotes the speed of movement of the mobile station, y denotes the reduction of reception power (a difference between the reception level at a certain time and the reception level at the current time), k denotes a predetermined constant, and z denotes a value "the reduction of reception power divided by the speed of movement", and FIG. 19 shows a method in which the reduction of reception power is analyzed according to the relative magnitude with respect to the constant k.

In FIG. 19, the reception power is judged to be rapidly decreasing when the calculated value z is equal to or larger than the constant k, and it is judged not to be rapidly decreasing when z is smaller than the constant k.

When the mobile station is moving away from the base station, the power that the mobile station receives from the base station rapidly decreases according to the speed; however, this cannot be distinguished from a rapid reduction of reception power caused by a dead spot. However, by dividing the reception power reduction by the speed of movement, the result of analysis of the rapid reduction of reception power (z≥k in FIG. 19, z(k) better agrees with the specifying of dead spots.

Also, the results of analysis can be provided as historical information from the mobile station to the base station and employed to control beam from the base station to the mobile station or to help the base station host apparatus give instructions to the base station for handover, so as to stabilize communication.

Also, the results of analysis as historical information can be collected as logs in the base station or base station host apparatus to find dead spots, and then measures can be taken by raising power of the base station, or very-small-sized base stations can be newly installed in dead spots, so as to reduce dead spots.

### (A-17. Control of Number of Antenna Branches Using Historical Information)

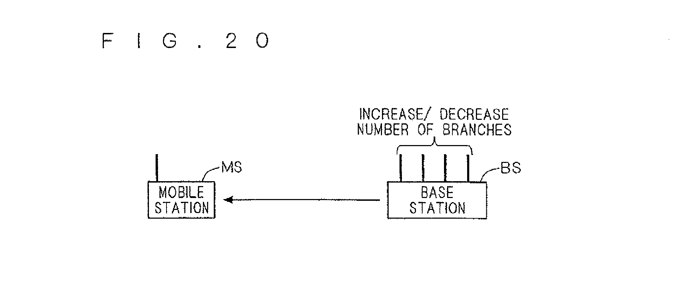

Now, referring to FIGS. 20 to 24, a system for controlling the number of antenna branches using historical information will be described.

FIG. 20 is a diagram schematically showing that a base station BS receives historical information from a mobile station MS and increases/ decreases the number of antenna branches used when the base station BS transmits data to the mobile station MS (or when it receives data from the mobile station MS).

The base station BS receives historical information from the mobile station MS and provides control to increase/ decrease the number of antenna branches. That is to say, for example, when the mobile station MS sends historical information indicating that the reception power became small, the number of antenna branches of the base station BS can be increased to enlarge the power that the mobile station MS receives. Also, when the mobile station MS sends a history indicating that the reception power is too large, the base station BS can reduce the number of antenna branches to lower the power received at the mobile station to appropriate value. This reduces power consumption of the base station.

FIG. 20 shows that the base station BS itself determines to increase/ decrease the number of antenna branches, but the system may be configured such that a base station host apparatus determines to increase/ decrease the number of antenna branches of the base station BS on the basis of historical information and gives instructions to the base station BS to increase/ decrease the number of antenna branches.

### (A-17-1. Configuration of Base Station)

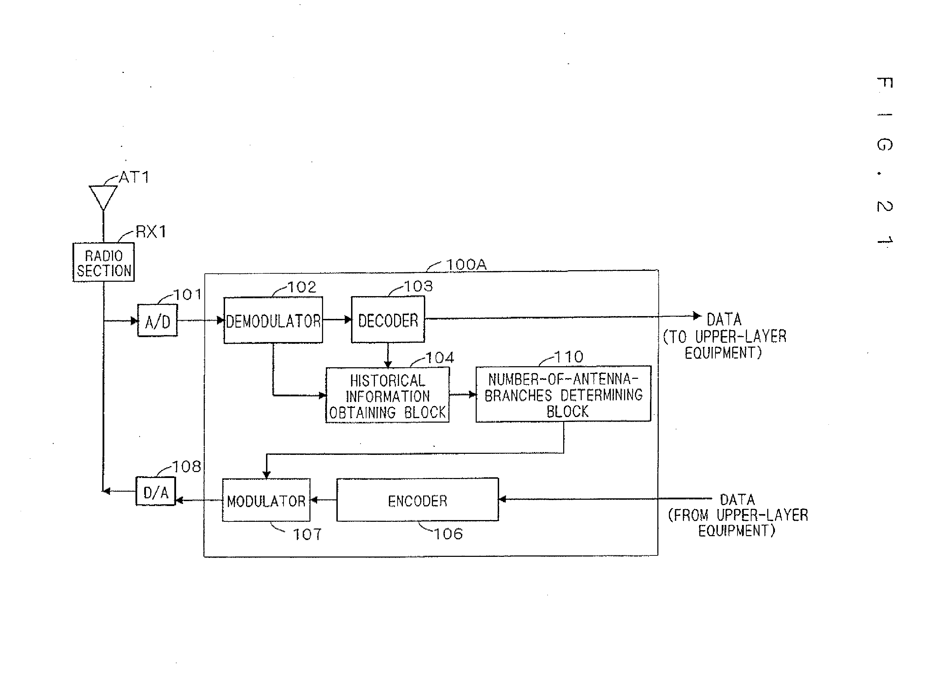

FIG. 21 is a block diagram illustrating the configuration of a base station that can increase/ decrease the number of antenna branches on the basis of historical information. The same components as those of the base station shown in FIG. 11 are denoted by the same reference characters and not described in detail again here.

A data processor block 100A shown in FIG. 21 includes a demodulator 102, a decoder 103, a historical information obtaining block 104, an encoder 106, a modulator 107, and a number-of-antenna-branches determining block 110. The analyzer 105 and the beam forming block 109 shown in FIG. 11 are not shown here.

When, in the demodulator 102, historical information is contained in the control channel of physical channel, the historical information is extracted in the historical information obtaining block 104 and given to the number-of-antenna-branches determining block 110. The number-of-antenna-branches determining block 110 determines the number of antenna branches required for the communication with the mobile station, on the basis of information about the reception power at the mobile station contained in the historical information.

When historical information is contained in the data channel of physical channel and cannot be extracted without channel decoding and L2 processing, it is given to the historical information obtaining block 104 through the decoder 103.

In the case of W-CDMA, for example, when the first 2 bits of a first transport block of data of 1 TTI (Transmission Time Interval) form historical information, the historical information is extracted in the decoder 103.

When the number of required antenna branches determined in the number-of-antenna-branches determining block 110 is given to the modulator 107, weighting values to be multiplied to the signals corresponding to individual antenna branches are determined to be 0 for antennas not used, and to be 1 for antennas used, so that signals are validated only for antennas used.

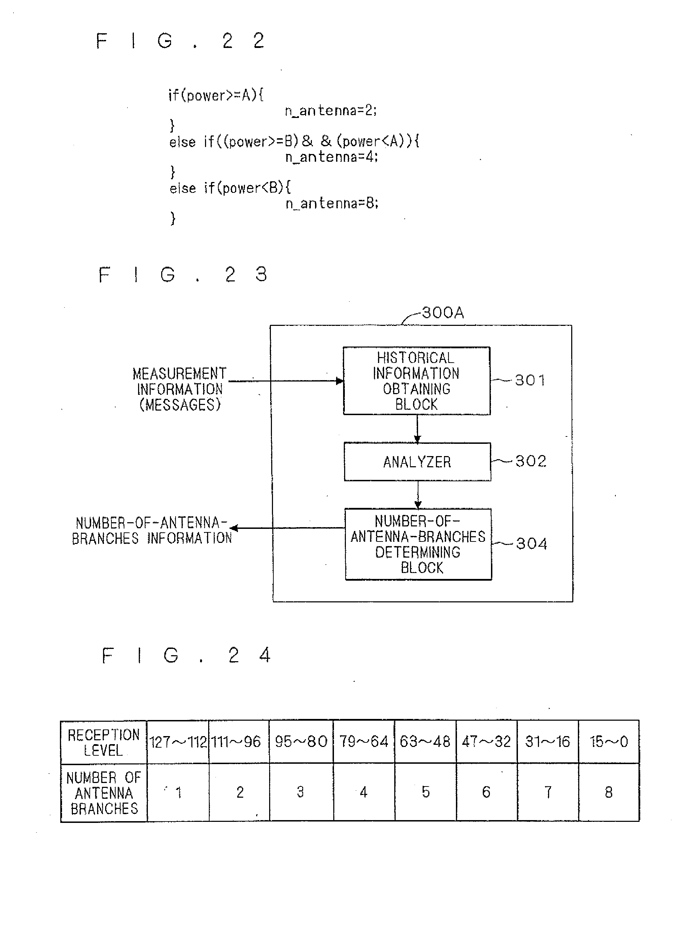

The number-of-antenna-branches determining block 110 can be formed of any of CPU, DSP, and FPGA. With DSP, when the historical information is power value information, the branching processing can be implemented with a program, e.g. 2 antennas when it is equal to or more than a certain power value A, 4 antennas when it is equal to or more than a certain power value B and less than A, and 8 antennas when it is less than the certain power value B. FIG. 22 shows an example in which such a program is generated in C language.

By adopting the configuration described above, the base station can increase/ decrease the number of antenna branches on the basis of historical information from the mobile station. Decreasing the number of antenna branches reduces the number of high-frequency components used, such as antenna switches or power amplifiers, connected to the antennas, resulting in reduction of power consumption of the components. On the other hand, when the processing of increasing/ decreasing the number of antenna branches is provided as circuitry in FPGA, the FPGA operates for a longer time accordingly and power consumption somewhat increases accordingly; also when it is incorporated as a program in DSP or CPU, the DSP and CPU operates for a longer time accordingly and power consumption somewhat increases accordingly; however, such increase in power consumption is smaller than the decrease in power consumption, and power consumption can be reduced as a result.

### (A-17-2. Configuration of Base Station Host Apparatus)

The description above has shown a configuration in which the base station determines the increase/ decrease of the number of antenna branches on the basis of historical information, but the system may be configured such that a base station host apparatus determines the increase/ decrease of the number of antenna branches.

FIG. 23 is a block diagram illustrating the configuration of a base station host apparatus that can judge the increase/ decrease of the number of antenna branches on the basis of historical information.

As shown in FIG. 23, the base station host apparatus includes a historical information accumulating block 301, an analyzer 302, and a number-of-antenna-branches determining block 304.

When the base station host apparatus receives historical information (measurement information) as messages, or in the form contained in data, from a base station, then the historical information accumulating block 301 extracts and stores the historical information, and the analyzer 302 analyzes the contents of the historical information.

Then, the number-of-antenna-branches determining block 304 determines the number of antenna branches on the basis of the historical information. In this case, when the historical information indicates reception level, the determination is made by using a table in which the number of antenna branches is described in association with the reception level.

Then, on the basis of the result of determination in the number-of-antenna-branches determining block 304, the information about the number of antenna branches used is transmitted to the base station communicating with the mobile station, or to a base station that is to communicate with the mobile station.

FIG. 24 illustrates a table describing a relation between the reception level and the number of antenna branches, where the historical information from the mobile station is the reception level in the above-described number-of-antenna-branches determining block 304 and the number-of-antenna-branches determining block 110 shown in FIG. 21.

As to the reception level, 128 levels, from 0 to 127, of reception power or reception amplitude are divided into 8 sections each including 16 levels, and the numbers of antenna branches from 1 to 8 are assigned thereto.

Larger numerical values of the reception level indicate larger reception levels, and the number of antenna branches used is set to be smaller as the reception level becomes larger. Also, the number of antenna branches used is set to be larger as the reception level becomes smaller.

By setting such a correspondence, the number of antenna branches used can be decreased when the reception level is larger and can be increased when the reception level is smaller.

A rougher correspondence may be used in place of the correspondence as shown in FIG. 24, in which case, for example, reception levels 111 to 48 are associated with the number of antenna branches "4", reception levels 127 to 112 are associated with the number of antenna branches "2", and reception levels 47 to 0 are associated with the number of antenna branches "6". When the correspondence is set in this way, the number of antenna branches "4" covers a large range of levels and the number of antenna branches can be increased/ decreased only when the reception level is at an upper or lower limit; such a configuration is provided for emergencies where the reception level goes to upper or lower limit.

The operation of making determination can be performed at high speed by using a table as described above; when the scheme is adopted in the base station host apparatus, the information about the number of antenna branches can be promptly provided to the base station after it has obtained historical information from the mobile station.

### (A-18. Operation of Analysis in Analyzer)

Next, some examples of the analysis operation in the analyzer provided in the base station or base station host apparatus described with FIGS. 11, 14, 21 (not shown), and 22 will be described.

### (A-18-1. When Using Information about Transmission Rate)

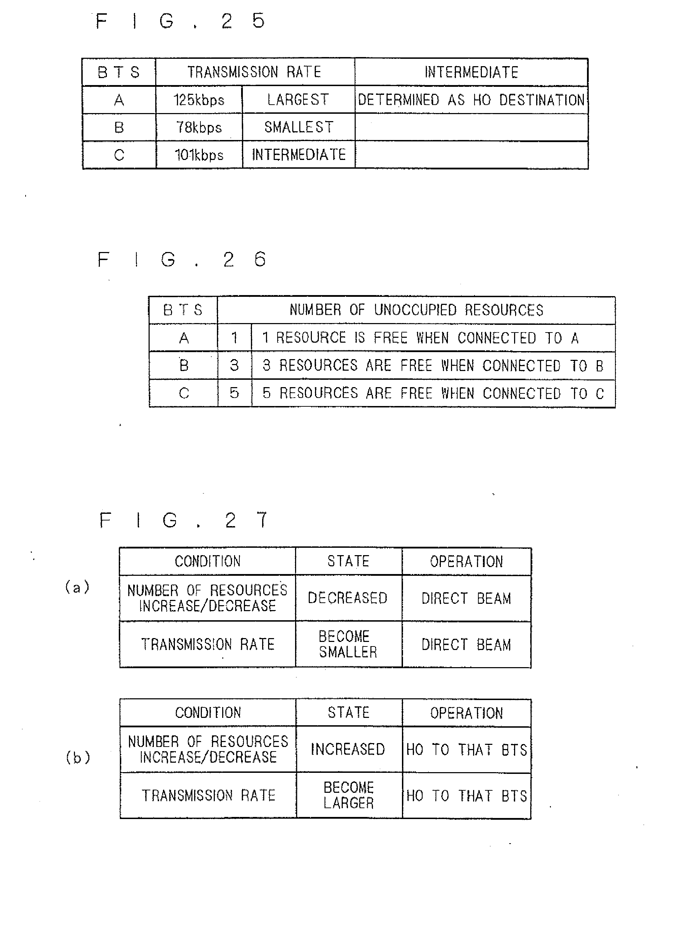

FIG. 25 shows a table used in the analyzer to determine a handover destination with information about the transmission rate when the mobile station is trying to perform a handover or when it is included in the communication areas of multiple base stations (not limited to when trying to perform a handover), where the historical information sent from the mobile station to the base station includes information about the transmission rate.

In the table shown in FIG. 25, there are three base stations (BTS) A, B and C as candidates for handover destination, and the table contains information about their respective transmission rates in communications performed in the past within a certain threshold. That is to say, the transmission rate of the base station A is 125 kbps and largest, the transmission rate of the base station B is 78 kbps and smallest, and the transmission rate of the base station C is 101 kbps and intermediate.

Accordingly, the analyzer determines the base station A with the largest transmission rate as the handover (HO) destination. Alternatively, it determines beam control such that the base station A directs beam to the mobile station.

In this way, the analyzer of the base station and base station host apparatus determines handover destination candidates or beam control destinations with historical information stored in the table, whereby the handover destinations or beam control destinations can be determined with a simple configuration.

### (A-18-2. When Using Information about Number of Unoccupied Resources)

FIG. 26 shows a table used in the analyzer to determine a handover destination with historical information, where, when the mobile station is communicating with base stations, it provides base stations with historical information including the numbers of unoccupied resources (radio resources) of the mobile station itself, as information about communication condition.

The mobile station may be connected only with a certain one base station, or may be connected simultaneously with multiple base stations, and the data may be used as a reference parameter for determining the handover destination when the mobile station is handed over from one base station to another base station.

When the mobile station is connected only with the base station C, for example, the mobile station is communicating with the base station C and provides the base station C with the historical contents indicating that the number of unoccupied resources is 5. On the basis of the historical information, the base station C or base station host apparatus provides control to raise the transmission rate. As to a configuration for providing control to raise the transmission rate, in the example of FIG. 11, for example, a transmission rate controller is provided in place of the beam forming block 109, and not the modulator 107 but the encoder 106 is controlled so as to increase the number of resources used in the mobile station.

In the example of the base station host apparatus shown in FIG. 14, the controller 303 provides control to increase the amount of transmission data. In this case, in the case of W-CDMA, ones with larger TFCI (Transport Format Combination Indicator) will be used.

On the other hand, when the mobile station is simultaneously connected with multiple base stations, the historical information from the mobile station is provided to individual base stations and the numbers of unoccupied resources corresponding to the multiple base stations are stored in the tables in the analyzers of the base stations or base station host apparatus.

That is to say, the table of FIG. 26 stores information indicating that the number of unoccupied resources is 1 when a connection is made with the base station A, the number of unoccupied resources is 3 when a connection is made with the base station B, and the number of unoccupied resources is 5 when a connection is made with the base station C.

From the table, the number of unoccupied resources is largest when a connection is made with the base station C, so that the base station or base station host apparatus increases the amount of downlink data to raise the transmission rate of the base station C. In case of W-CDMA, a control to increase TFCI is provided.

In this case, considering the numbers of unoccupied resources, the assignment of resources may be dynamically rearranged according to the historical information; for example, the number of resources used for the communication with the base station A is reduced by 2 to increase the number of unoccupied resources to 3, the number of resources used for the communication with the base station B is unchanged, and the number of resources used for the communication with the base station C is increased by 2 to reduce the number of unoccupied resources to 3. The unbalanced numbers of resources used are thus solved and stable communication is enabled.

When the mobile station performs a handover from one base station to another base station, the historical information is provided from the mobile station to a base station, and the historical information about the numbers of unoccupied resources of other base stations is stored in the table in the analyzer of the base station or base station host apparatus, In the example of the table of FIG. 26, the number of unoccupied resources is smallest when a connection is made with the base station A, and so the base station or base station host apparatus assumes that the communication with the base station A is the most stable and provides control to effect a handover to the base station A.

Or, some other systems have different ideas about communication quality and the number of unoccupied resources; when it is assumed that the resources can be best saved when a handover is effected to the base station C, the currently communicating base station or the base station host apparatus provides control to effect a handover to the base station C. This is a case where the quality of downlink data from the base station is good on the mobile station side, but the quality of uplink data from the mobile station is bad on the base station side. This can happen when the quality of downlink data received at the mobile station is good, but the base station side (base station or base station host apparatus) lowers the transmission rate of downlink data to the mobile station because the quality of uplink data from the mobile station is bad, and as a result the number of resources used in the mobile station is reduced and the number of unoccupied resources increases,

In this way, when quality is good but the number of unoccupied resources is large, the control based on the notification of historical information to the base station side by the mobile station raises the downlink transmission rate and raises throughput, and enables efficient data communication.

### (A-18-3. When Using Information about Increase/ Decrease in Communication Capacity)

FIG. 27 shows a table used in the analyzer to determine a handover destination by using historical information, where, during communication with a base station, the mobile station provides the base station with historical information indicating increase/ decrease in communication capacity.

(a) portion of FIG.7 shows a table with which a base station or base station host apparatus controls beams when communication capacity defined by the increase/ decrease of the number of resources and transmission rate is used as historical information.

As shown in table of (a) portion, when a decrease in the number of resources is confirmed in the historical information, the base station or base station host apparatus provides control to the base station communicating with the mobile station to direct beam. Also when a decrease in transmission rate is confirmed, the base station or base station host apparatus provides control to the base station communicating with the mobile station to direct beam.

(b) portion FIG. 27 shows a table with which the base station or base station host apparatus controls handover when the communication capacity defined by the increase/ decrease in the number of resources and transmission rate is used as historical information.

As shown in table of (b) portion, when it is confirmed in the historical information that the number of resources increased when the mobile station communicated with one base station a certain time ago, the base station or base station host apparatus instructs that base station to perform handover. Also when an increase in transmission rate is confirmed, the base station or base station host apparatus instructs that base station to perform handover.

Thus, using increase/ decrease in communication capacity as historical information offers the effects to reduce dead spots and enable efficient handover.

Also, the beam control and handover instructions can be achieved more accurately when the tables of FIG. 27 are multi-layered, for example, into a short time-width history and a long time-width history. For example, with the table of (a) portion of FIG. 27, when the short time-width condition indicates a history "resources not decreased/ transmission rate not became smaller" and the long time-width condition indicates a history "resources decreased/ transmission rate became smaller", then the weighting factor is set smaller such that beam is directed not rapidly but gradually.

When the short time-width condition indicates "resources decreased/ transmission rate became smaller", the weighting factor is enlarged to provide control to rapidly direct beam.

With the table of (b) portion of FIG. 27, in the same way, a handover is performed when the short time-width condition indicates "increase/ decrease in the number of resources: not increased and not decreased" and "transmission rate: not changed", and the long time-width condition indicates "increase/ decrease in the number of resources: increased" and "transmission rate: became larger".

Also, a handover is performed when the short time-width condition indicates "increase/ decrease in the number of resources: decreased" and "transmission rate: became smaller", and the long time-width condition indicates "increase/ decrease in the number of resources: increased" and "transmission rate: became larger".

Handover is not performed when the short time-width condition indicates "increase/ decrease in the number of resources: increased" and "transmission rate: became larger", and the long time-width condition indicates "increase/ decrease in the number of resources: decreased" and "transmission rate: became smaller".

Forming the historical information in layers enables more accurate beam control and handover instructions, and offers significant effects to reduce dead spots and facilitate handover.

### (A-19. Variation of Beam Control)

The description above has explained that the beam control of base stations is performed for the purpose of enabling efficient handover with mobile stations and to reduce dead spots; but, a variation as shown below is possible.

Now, for a judgment of a failure of an adjacent base station, suppose, for example, historical information about an adjacent base station exhibited rapid falls of the number of resources and transmission rate, and an increase in communication was detected with a base station performing main communication (interference power suddenly disappeared).

A mobile station is performing main communication with a closest first base station and also performing communication with an adjacent second base station at the same time.

A mobile station is performing main communication with a closest first base station and is included also in the communication area of an adjacent second base station, and it has a history of communication with the second base station within a certain time period from an experience of handover.

With the two cases above, in the former case (simultaneously communicating with two base stations), the mobile station provides the historical information from the two base stations to the first base station or base station host apparatus, whereby the first base station or base station host apparatus determines a failure of the adjacent base station.

That is to say, the second base station, or the adjacent base station, is judged to have a failure when the historical information about the second base station indicates rapid falls of the number of resources and transmission rate and an increase in communication with the first base station is detected.

In the latter case (communicating only with one base station), the history of communication with the adjacent second base station within a certain time period can be an effective history when a handover to the second base station was once conducted but it soon returned to the first base station, and the first base station or base station host apparatus judges that the adjacent base station has a failure.

Then, after the determination of failure was made, the first base station not suffering a failure performs control to increase transmission power and direct beam to cover the communication area of the second base station. That is to say, it performs beam control to cover the failure.

In this way, with information from mobile stations, base stations can find a base station having a failure and provide control to cover the failure from an adjacent base station.

### (A-20. Methods of Calculating Transmission Rate)

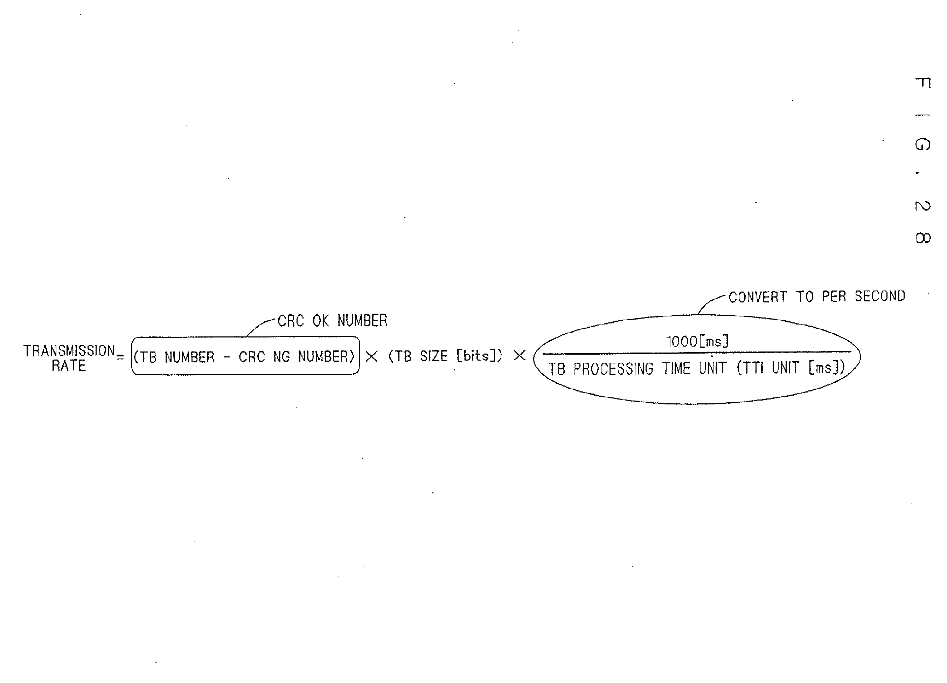

The mobile communication system MC5 described with FIG. 5 uses transmission rate as historical information, and a first example of a method of calculating the transmission rate will be described referring to FIG. 28.

FIG. 28 shows a transmission rate calculating method for W-CDMA. In W-CDMA, the transmission rate is obtained by: the number of TBs (Transport Blocks) minus the number of CRC NGs (error data) attached to TBs (CRC NG number), or the number of CRC OKs (no-error data) (CRC OK number), multiplied by the number of bits of TBs per TTI, and converted into the number of bits per second. In place of the number of CRC NGs, the number of CRC OKs may be directly counted without calculating (TB number - CRC NG number).

The transmission rate can thus be relatively easily obtained, and the amount of processing is small and high-speed operation is possible.

Alternatively, the mobile station may send only the CRC NG number (or OK number) to the base station as historical information. In this case, the calculation above is conducted in the base station or base station host apparatus; the base station or base station host apparatus can calculate the transmission rate since they can know parameters, other than the CRC NG number, used for the calculation, such as TB size. Then the mobile station does not have to calculate transmission rate and the amount of processing in the mobile station is reduced, and the mobile station can send it at high-speed back to the base station as historical information.

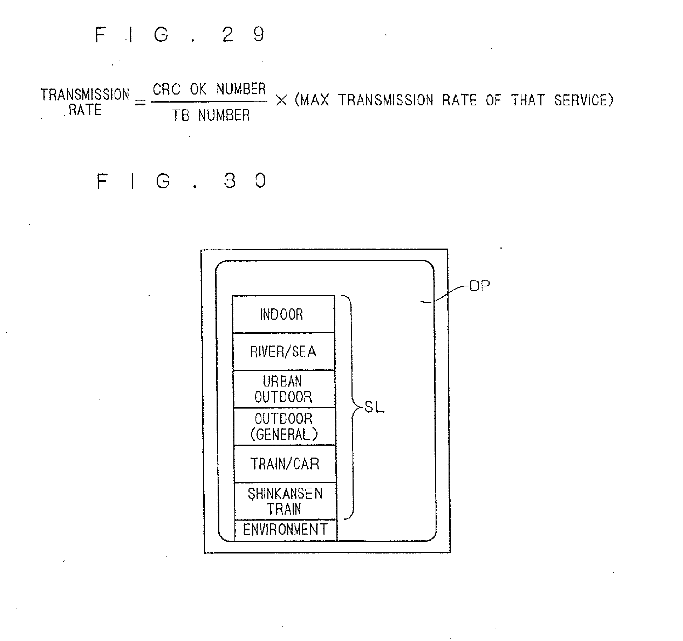

FIG. 29 shows a second example of a transmission rate calculating method.
In W-CDMA, as shown in FIG. 29, the transmission rate can be obtained by: the number of CRC OKs attached to TBs (CRC OK number) divided by the number of TBs, multiplied by the maximum possible transmission rate of that service.

The actual transmission rate is thus calculated as: the ratio between the total TB number and CRC OK TB number multiplied by the maximum transmission rate.

This calculating method includes a less number of multiplications than the calculating method described with FIG. 28, and the amount of processing is reduced and the transmission rate can be calculated at higher speed.

Also, as with the calculating method described with FIG. 28, the mobile station may send only the CRC OK number (or CRC NG number) to the base station as historical information, in which case the base station or base station host apparatus can perform the calculation and the same effects are obtained.

### (A-21. Notification of Historical Information by User)

### (A-21-1. Effects of Notification by User)

The description so far has illustrated configurations in which a mobile station measures reception level etc. when receiving data from a base station and provides the results of measurement as historical information, or in which a mobile station provides handover failure information as historical information, where these operations are automatically performed by functions provided in the mobile station.

Now, a configuration will be described below in which a user sets the current fading environment through GUI or button operation in the mobile station and the contents are provided to a base station as historical information.

FIG. 30 is a diagram illustrating the screen of a mobile station through which a user sends the current fading environment to a base station as historical information.

As shown in FIG. 30, the display DP of a mobile communication device, such as a mobile phone, as the mobile station, displays an environment select screen SL for selecting Indoor, River/Sea, Urban Outdoor, Outdoor (general), Train/Car, and Shinkansen train, where the user can make arbitrary selection.

For example, when the user selects "Indoor", the mobile station sends the information to a base station as the fading environment where the mobile station is currently positioned. The historical information is received at the base station or base station host apparatus; when there is a very-small-sized base station having an indoor-use cell radius in a room closest to the mobile station, the base station or base station host apparatus gives instructions to that base station to communicate with the mobile station, and the mobile station preferentially connects to that very-small-sized base station.

Now, if the mobile station is included in both of the communication area of a macro-cell base station with a large radius (around several kilometers) and the communication area of an indoor-use (home-use) very-small-sized base station with a small radius (around L0 m) and the mobile station is connected to both, as in a soft handover condition in W-CDMA, then the base station host apparatus gives instructions such that the mobile station is handed over to the very-small-sized base station and communicates only with the very-small-sized base station, or the communicating base station gives instructions to the target base station, e.g. to the macro-cell base station, not to direct beam to the mobile station.

Thus, the mobile station can stably communicate with the very-small-sized base station. Also, the mobile station can be used as a fixed telephone used only within that house.

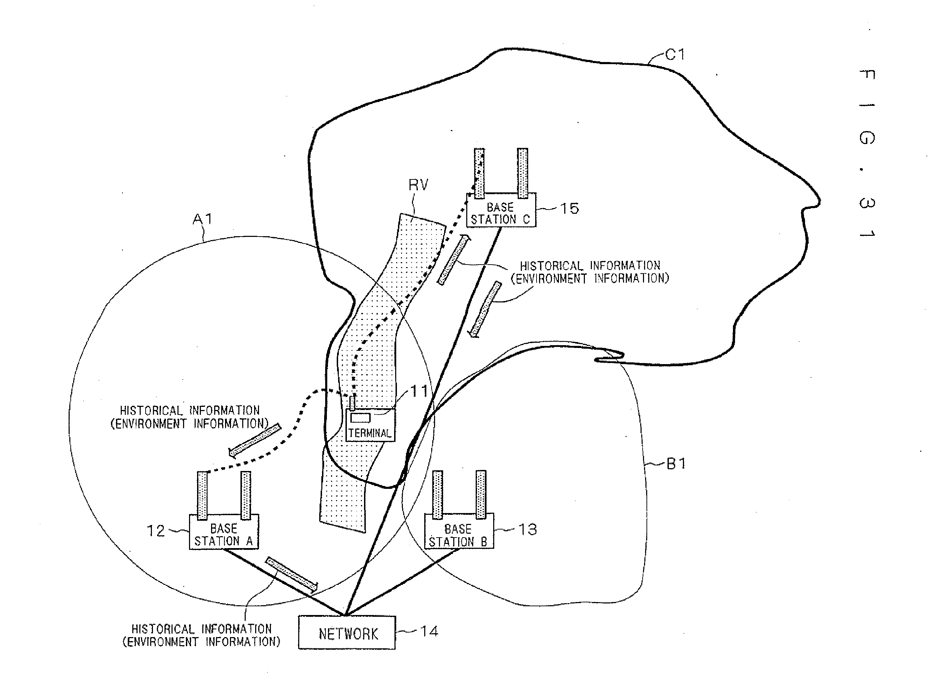

When the user selects "River/Sea", it is possible to realize operations to eliminate interference waves from far-off stations since there are fewer obstacles; which will be described later referring to FIG. 31.

When the user selects "Urban Outdoor", the mobile station provides the information to the base station as the fading environment where the mobile station is currently positioned. "Urban Outdoor" assumes a place surrounded by buildings or in an office in a building. When there are many dead spots and very-small-sized base stations having cell radiuses of several to several tens of meters are installed in such dead spots, the currently communicating base station or base station host apparatus gives instructions to other base stations such that those other base stations will not direct beam to the mobile station or not to effect handover when the mobile station is communicating with such a very-small-sized base station.

This prevents the user from being suddenly subjected to interference waves from a macro-cell base station, e.g. when the user was behind a building and walked just some steps out from behind the building. However, when the quality of communication with the very-small-sized base station deteriorates, the other base station or base station host apparatus stops the control of preventing other base stations, other than the very-small-sized base station, from directing beam to the mobile station or from effecting handover.

When the user selects "Outdoor (general)", the mobile station provides the information to the base station as the fading environment where the mobile station is currently positioned. "Outdoor (general)" assumes the general outdoor with relatively few obstacles, such as a residential area.

For example, when a home-use very-small-sized base station is provided in a house in a residential area, the radio waves from the very-small-sized base station serve as interference waves for a user walking around the house. This is because the mobile station is in an overlap of the communication area of a macro-cell base station and the communication area of the home-use very-small-sized base station.

Accordingly, when the user is staying outdoors, the historical information of "Outdoor (general)" is provided to the currently communicating macro-cell base station, and the base station or base station host apparatus provides control such that the very-small-sized base station will not direct beam to that mobile station, or such that it will not connect to that mobile station, e.g. by preventing assignment of resources.

Thus, for the mobile station staying outdoors, interference waves from the very-small-sized base station provided indoors are reduced. This control operation is possible because the very-small-sized base station subjected to the control temporarily comes in a handover condition with the mobile station and the base station host apparatus can therefore identify that very-small-sized base station.

Even when the mobile station communicates with the very-small-sized base station before the user selects "Outdoor (general)" and cannot return to the communication with the macro-cell base station, it is possible to enable it to return to the communication with the macro-cell base station when this selection is made, as the very-small-sized base station controls itself, or as the base station host apparatus controls the very-small-sized base station, such that the very-small-sized base station will not direct beam.

When the user selects "Train/Car" and selects "Car", the display DP of the mobile station displays a screen in which the destination can be set, like a car navigation system, and the user inputs the destination; then, the base station or base station host apparatus gives instructions to base stations that are to communicate with the mobile station (or base stations that are not to communicate) such that the mobile station can be handed over to most appropriate base stations as it moves, or such that most appropriate base stations will direct beam thereto. Thus, the mobile station can always communicate only with the most appropriate base stations.

Similarly, when "Train" is selected, the display DP of the mobile station displays a screen in which the destination station etc. can be set, and the user sets the destination station; then the base station or base station host apparatus gives instructions to base stations that are to communicate with the mobile station (or base stations not to communicate) such that optimum handover and beam control can be achieved.

When the User selects "Shinkansen train" and sets the destination station and the start and arrival times of the target Shinkansen train in a manner similar to those of "Train", the mobile station provides the information to the base station; then, on the basis of the information, the base station or base station host apparatus gives instructions to base stations that are to communicate with the mobile station (or base stations not to communicate) such that optimum handover and beam control can be achieved.

"Shinkansen train" is independently identified because it moves at particularly high speed and the mobile station is handed over to a large number of base stations. For example, when it is in connection with one base station before it comes into a tunnel, it stays in connection with the same base station while it is inside the tunnel, but radio waves from another base station placed forward of the tunnel suddenly become intensive when it comes out of the tunnel; the radio waves serve as interference until it is handed over, and then transmission power control, present in W-CDMA, for example, will not work and the connection may be broken.

In order to avoid such a problem, the base station placed forward of the tunnel is controlled for a while after the mobile station came out of the tunnel such that the base station lowers the transmission power to the mobile station and raise power gradually, for example.

When a base station or an antenna of a base station is provided inside a tunnel, a mobile station moving at the speed of Shinkansen train is controlled to be handed over to the base station (the base station's antenna) as early as possible before it comes into the tunnel.

When a mobile station is inside a tunnel and then goes out of the tunnel, it is controlled to be handed over to a base station out of the tunnel as early as possible.

The base station out of the tunnel is controlled such that it directs beam to the mobile station while the mobile station is inside the tunnel, and such that it weakens the power of beam toward the mobile station for a while after the mobile station came out of the tunnel so that the power received at the mobile station will not rapidly rise.

Such control is enabled when "Shinkansen train" is selected, and the mobile station can stably communicate with base stations as optimum handover control and beam control are possible while it is traveling on the Shinkansen train.

Also, when the mobile station informs the base station that it is on the Shinkansen train as historical information, the base station or base station host apparatus can know the speed of movement of the mobile station. Then, it is possible to appropriately perform reception processing in the base station (in averaging with a loop filter during demodulation, the time constant can be optimized to the high moving speed of the Shinkansen train, for example), and to appropriately perform handover, beam forming, etc. according to that fading environment, whereby communication quality is enhanced and communication can be performed stably.

For another measure, during high-speed movement like when "Shinkansen train" or "Train" is selected, it is also effective to reduce the number of averaging operations of the reception power in the demodulator so that path can be detected quickly.

In this way, when the user enters the fading environment, it is possible to relatively easily achieve control operations suitable for the environment where the mobile station is placed.

### (A-21-2. Operation when "River/Sea" is selected)

Next, referring to FIG. 31, an example of operation performed when the user selects "River" will be described.
In FIG. 31, when a mobile station 11 communicating with a base station A moves to the river RV where fewer obstacles are present, it receives radio waves from a base station C that it did not receive before moving. The communication area C1 of the base station C exists along the river RV, and the mobile station 11 enters the communication area 11 only when it is present in the river RV; the radio waves from the base station C do not reach when the mobile station 11 goes away from the river RV. On the other hand, the communication area A1 of the base station A covers a large area including the river RV, and the communication area B1 of a base station B also covers an area near the river RV.

In such a case, there is no need to communicate with the base station C because even if the mobile station is handed over to the base station C, it will soon be returned to the communication with the base station A, or will soon be handed over to the communication with the base station B. Accordingly, the radio waves from the base station C can be regarded as interference waves.

When the user operates the screen to set that the mobile station 11 is currently in the river, the mobile station 11 provides that environment information to the base stations A and C. Then, a base station or base station host apparatus gives instructions such that the base station C will not communicate with the mobile station and not direct beam thereto. Then, the mobile station 11 is less likely to be influenced by the interference waves from the base station C even when it is in the river. The same effect is obtained not only when it is in a river but also when it is in a broad street.

### (A-21-3. Automatic Acquisition of Environment with Condition Notifying Servers)

Next, a configuration will be illustrated where the environment of the mobile station can be automatically obtained even when the user does not select the environment like "River/Sea".

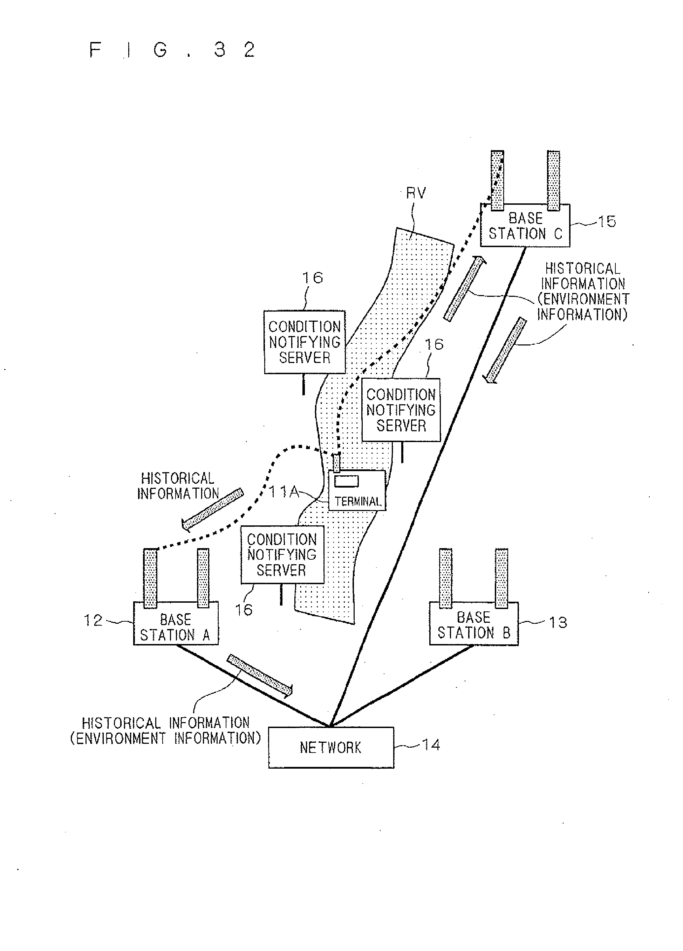

Like FIG. 31, FIG. 32 is a diagram showing a mobile station 11A in the vicinity of the river RV. As shown in FIG. 32, condition notifying servers 16 (local servers), which notify the mobile station 11A that it is in the river, are provided along the river RV, and they notify the mobile station 11A that it is in the river RV when it enters their communication areas. Accordingly, the mobile station 11A can automatically know its environment even when the user does not enter information from the environment select screen etc.

The mobile station 11A provides the obtained environment information to the base stations A and C, and the mobile station 11A is subjected to less interference from the base station C as described with FIG. 31, and can perform stable communication.

Such condition notifying servers 16 can be employed not only near rivers but also in indoor areas, cars, trains, and Shinkansen trains, whereby the mobile station 11A can automatically obtain information about its environment etc. and send the information to base stations.

Also, the function of the condition notifying server may be contained in a very-small-sized base station (which may be provided indoors or outdoors); also, condition notifying servers may be provided in vehicles such as Shinkansen trains, other trains, or cars; when a mobile station gets on such a vehicle, the mobile station can be informed from the condition notifying server in the vehicle that it has got on the vehicle, and it can send the information to base stations as historical information.

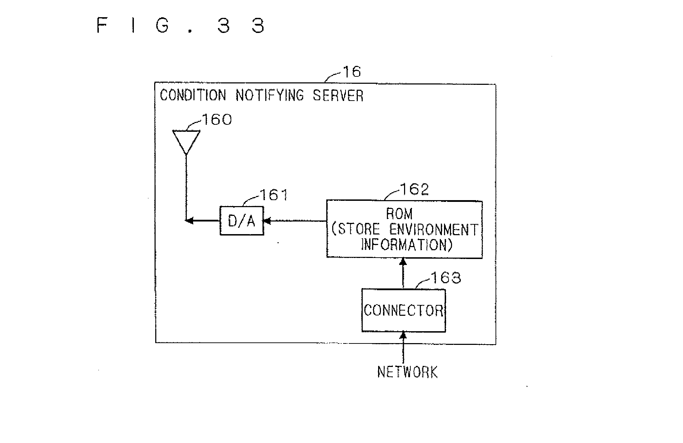

The configuration of the condition notifying servers 16 will be illustrated referring to the block diagram of FIG. 33.
As shown in FIG. 33, the condition notifying server 16 includes a ROM (Read Only Memory) 162 that stores information (environment information) corresponding to historical information, a D/A converter 161 that converts digital signal read from the ROM 162 and outputs analog signal, an antenna 160 that sends out the analog signal outputted from the D/A converter 161, and a connector 163 that connects the ROM 162 to external equipment.

A modulator may be provided between the ROM 162 and the D/A converter 161. In this case, a demodulator is provided in the receiving mobile station.

In order to prevent tempering of environment information, the environment information may be encrypted. In this case, in the configuration of FIG. 33, an encrypting block is provided between the ROM 162 and the D/A converter. A decrypting block is provided in the receiving mobile station.

Thus, the condition notifying server 16 can take a simple configuration, and the costs of digital signal boards etc. can be low; also, low-priced high-frequency transmission equipment etc. can be used when it is designed for operations within short distances (around 20 to 30 meters). Also, it can be mass-produced (mass-ordered) products when they are installed in a large number of places, and individual devices including the ROM 162, connector 163, and D/A converter 161 can be lower-priced and the entire condition notifying server 16 can be low-priced and can be installed at low costs.

Also, when the condition notifying server 16 stores detailed information about the position, it is possible to know through a base station or base station host apparatus how the mobile station 11A moved.

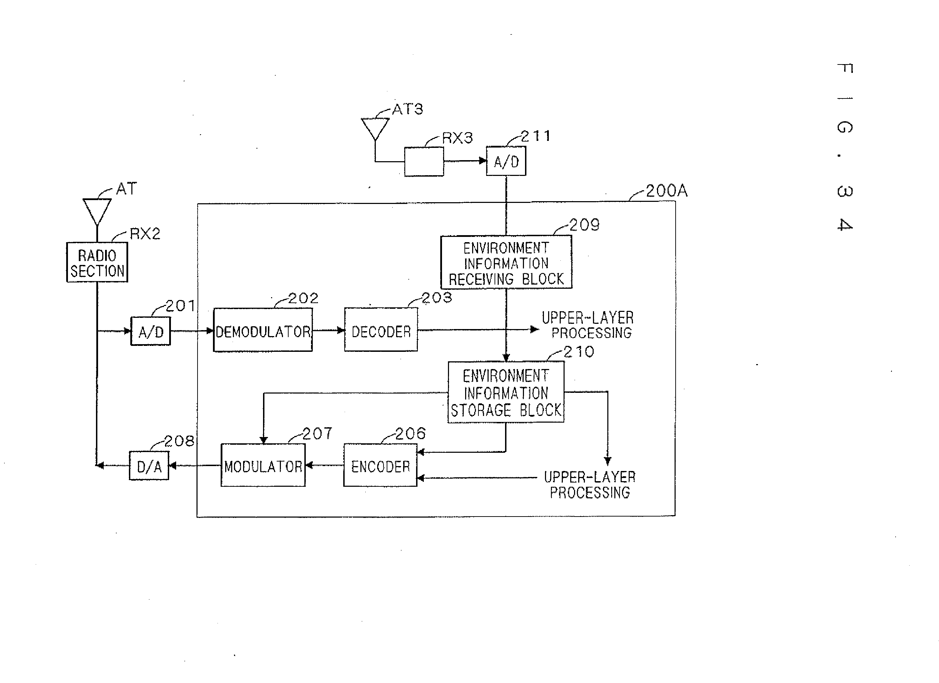

FIG. 34 is a block diagram illustrating the configuration of a mobile station 11A that can receive environment information from the condition notifying server 16 shown in FIG. 33.

The data processor block 200A shown in FIG. 34 has basically the same configuration as the data processor block 200 of the mobile station 11 described with FIG. 12, and the operations of processing data exchanged with base stations are the same; but it further includes an antenna AT3 for receiving notifications from the condition notifying server 16, a radio section RX3 for down-converting the signal received at the antenna AT3 to generate a baseband signal, an A/D converter 211 for A/D converting the baseband signal, an environment information receiving block 209 for analyzing the environment information converted to digital signal, and an environment information storage block 210 for storing the environment information.

The environment information receiving block 209 analyzes information by referring to a table that defines, for example, data "1" as presence in a river, data "2" as presence indoors, etc.

When the environment information signal is modulated, a demodulator may be provided between the environment information receiving block 209 and the A/D converter 211 as stated above, and a decrypting block may be provided between the environment information receiving block 209 and the A/D converter 211 when the environment information signal is encrypted.

The environment information stored in the environment information storage block 210 is inserted into data from an upper layer, or inserted in the format in the encoder 206, or bit-inserted in the control channel of physical channel in the modulator 207 (in the case of W-CDMA, an area for storing historical information is provided in DPCCH).

The mobile station 11A thus configured can automatically get information from the condition notifying servers 16 about where the mobile station 11A is currently present and in what environment it is present, and it can provide that information to a base station or a base station host apparatus through a base station.

### (A-22. Method of Calculating Transmission Rate)

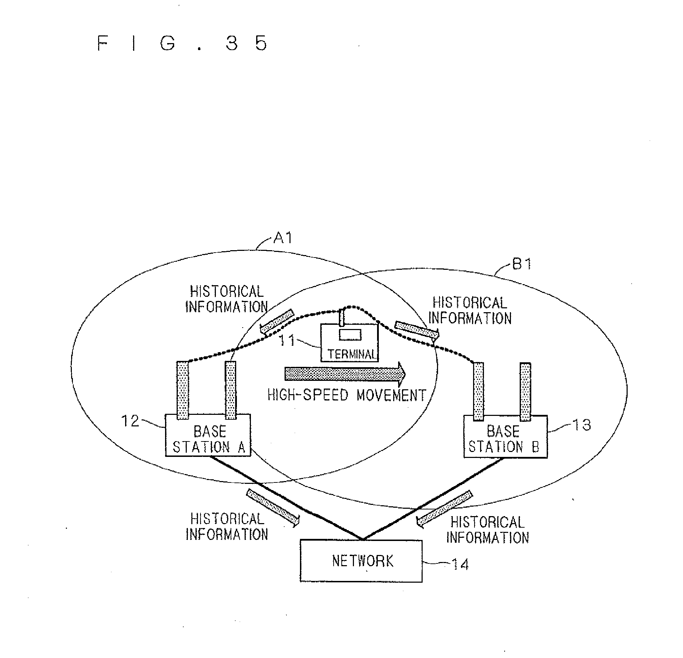

The mobile communication system MC4 described with FIG. 4 employs the speed of movement of the mobile station as historical information; a method of calculating the speed of movement will be described referring FIGS. 35 to 37.

FIG. 35 is a diagram illustrating a mobile communication system in which the historical information provided from the mobile station 11 to the base station side is "high speed" of movement of the mobile station.

As shown in FIG. 35, the mobile station 11 is communicating with the base station A, and moving at high speed toward the base station B. In the middle between the base station A and the base station B, it enters the communication area B1 of the base station B and goes into a handover condition from the base station A to the base station B.

In this case, on the basis of the historical information, indicating high speed movement, provided from the mobile station 11 to the base station A or the base station B, the base station or base station host apparatus (network) instructs the base station A and the base station B to direct beam to the mobile station 11 such that the communication areas overlap as long as possible so that the handover can take longer time.

Then, the mobile station 11 does not have to complete the handover in haste even when it is moving at high speed, and the possibility of handover failure is reduced.

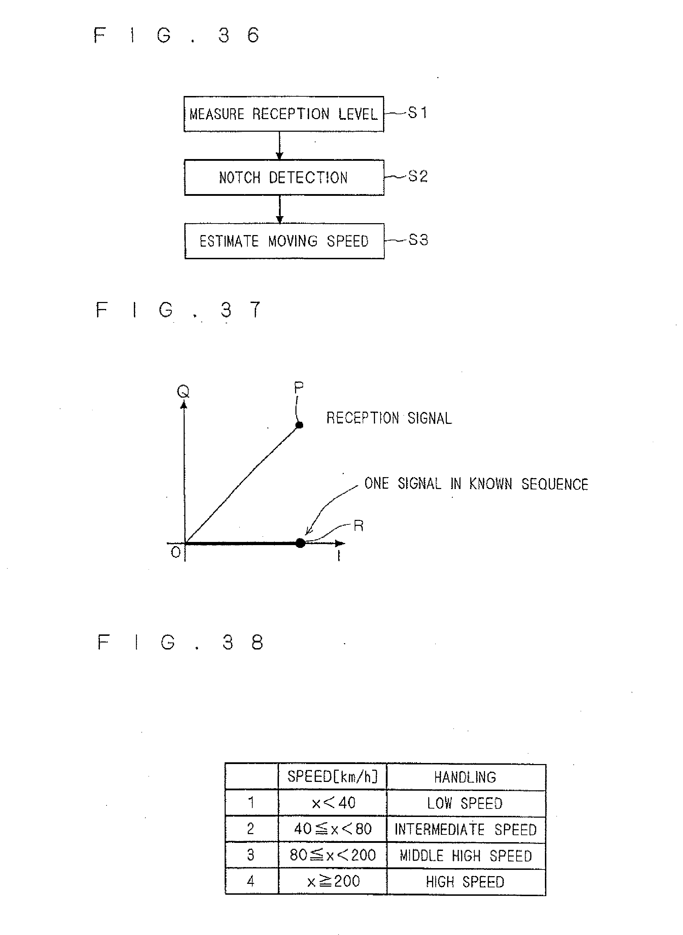

FIG. 36 is a flowchart illustrating a procedure for obtaining the moving speed in the mobile station 11; in the configuration of the mobile station 11 shown in FIG. 12, this calculation is performed in the demodulator 202 or measurement block 205.

First, in a reception level measuring block in the demodulator 202, the intensity of signal power that the mobile station 11 receives from the base station is measured (Step S1). In this case, signal power may be divided into levels and obtained as a reception level.

The reception level thus obtained is given to a notch detecting block in the demodulator 202, and whether the level falls down is determined (Step S2). When the falls are judged to be fading notches (falls of power), the notch cycle is detected next.

Then, in a moving speed estimating block in the demodulator 202, the speed of movement is estimated by referring to a table that associates the notch cycle, information such as radio frequency, band, etc. and the speed of movement (which can be maximum Doppler frequency). The mobile station can thus estimate the speed of movement.

The notch detection can be obtained from the degree of signal distortion and the deterioration of reception level. That is to say, the degree of signal distortion can be calculated using the principle shown in FIG. 37 when the amplitude of I and the amplitude of Q of the reception signal are known.

The magnitude of the amplitude of received signal is divided into levels, and the reception level is obtained, for example, as level 3 from one value to another value, as level 17 from one value to another value, and so on.

The degree of signal distortion is obtained, for example, with the square sum of "I component (real part)" (known signal is 1+0×j and so a difference with subtraction of 1) and "Q component (imaginary part)", and the distortion is judged to be large when the value is 0.7 or larger.

That is to say, the signal is represented with a complex number, and when the known signal (one of pilot symbols in the case of W-CDMA) is 1+j×0, it is plotted in FIG. 37 in the position of point R at the end of the thick line on I axis.

On the other hand, in FIG. 37, the reception signal (distorted signal) is plotted in the position of point P at the end of thin line in the quadrant defined by I axis and Q axis. The phase difference and amplitude difference between the two are the signal distortion, and the position of point P in FIG. 37 is 1.1+j×0.9 and the degree of distortion is 1.1+j×0.9.

In this way, in the notch detecting block in the demodulator 202, the degree of signal distortion is first obtained, and in combination with the reception level, notch is judged to be detected when the degree of signal distortion is large and reception level is low.

The reception level is divided into levels 0 to 127, for example, and the reception level is judged to be low when it is level 10 or below.

The notch detecting block and moving speed estimating block are both formed of DSP or FPGA.

Whether the calculated moving speed is high speed or not can be obtained by conditional branching by referring to the table of FIG. 38.

That is to say, the speed is handled as being low when it is less than 40 km/h, as being intermediate when 40 km/h or more and less than 80 km/h, as being middle high when 80 km/h or more and less than 200 km/h, and as being high when 200 km/h or more.

### (A-22-1. Another Example of Method of Calculating Transmission Rate)

In place of the method shown in FIG. 36, the speed of movement may be obtained by comprehensively considering the history of received field strength, estimated transmission path characteristic (CIR) calculated in the mobile station, reception power (in the case of W-CDMA, constant-power common channel from base stations), frequency deviation, delay profile movement, etc., for example. In this case, when the received field strength or reception power from one base station became gradually larger, the approaching speed is judged to be slow, and when such value is becoming smaller rapidly, the separating speed is judged to be high, for example.

As to CIR, a judgment can be made according to how much the CIR deviates from 1+0×j, and the speed of movement can be judged to be large when the phase rapidly rotates, and can be judged to be small when the phase gradually rotates.

Also with frequency deviation, the speed of movement is judged to be large when the deviation rapidly becomes larger (smaller), and the speed of movement can be judged to be small when the deviation gradually becomes larger (smaller).

As to the movement of delay profile position, the speed of movement can be judged with the rate of movement of the largest correlation position. The speed of movement may be judged according to a combination of the factors, or the speed of movement may be comprehensively judged by combining them and that obtained from fading notch.

Also, the speed of movement can be roughly estimated by forming the history table of FIG. 15 in multiple layers, i.e. in a short time width (e.g. per 666 µs) history and a long time width (e.g. per 20 ms) history. That is to say, when the variations are small in the 666 µs-width history but the variations are intermediate in the 20 ms-width history, it can be estimated as moving at low speed. Also, it can be estimated as moving at high speed when the variations are large in the 666 µs-width history. The speed of movement of the mobile station can be simply estimated without complicated calculations by adopting such an estimation method.

As described above, the precision of the estimation of moving speed can be enhanced by obtaining the moving speed on the basis of a large number of measurement results.

### (B. Second Preferred Embodiment)

A mobile communication system according to a second preferred embodiment of the present invention is characterized in that a mobile station transmits/ receives different data to and from different base stations in a mobile communication system where the mobile station can communicate simultaneously with a plurality of base stations.

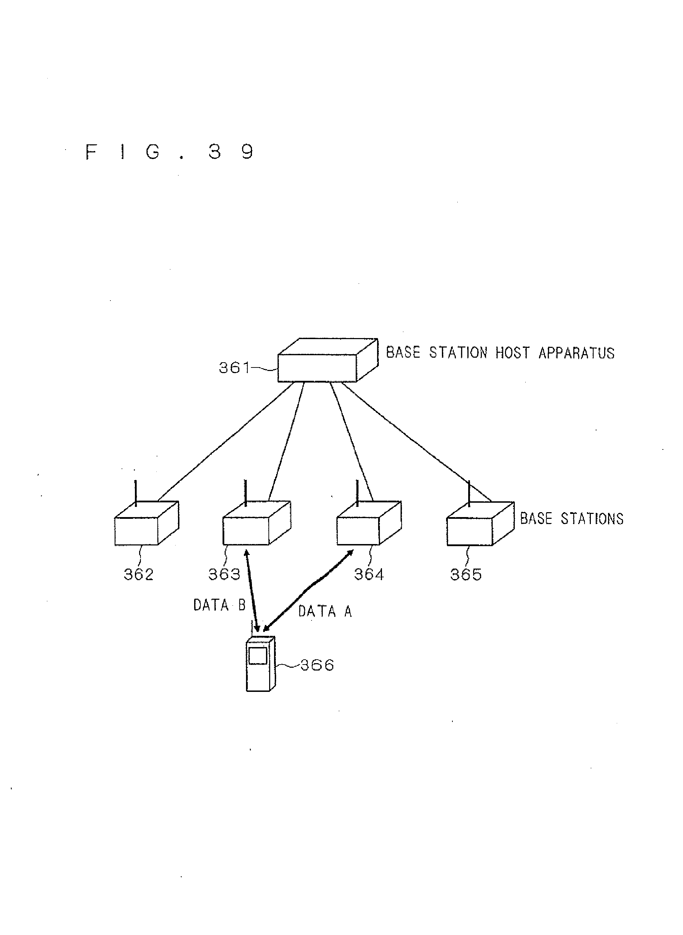

FIG. 39 illustrates the configuration of the mobile communication system according to the second preferred embodiment.
In FIG. 39, a plurality of base stations 362, 363, 364 and 365 are connected to a base station host apparatus 361. The connections with the base stations can be either wireless or wired. The base stations 362 to 365 communicate with a mobile station 366 by radio.

Next, the operation will be described referring to FIG. 39.
In FIG. 39, the mobile station 366 is communicating simultaneously with the base stations 363 and 364. In this case, the mobile station 366 exchange different data with the base stations 363 and 364.

As to the method of transmission/ reception of different data, when the mobile station performs radio transmission by OFDM in the data transmission from the mobile station to the base stations, it can transmit data A to the base station 363 by using one sub-carrier, and transmit data B to the base station 364 by using a bus-carrier not used for the transmission of data A.

On the other hand, in the transmission from the base stations to the mobile station, when the base stations employ single carrier transmission, the base stations 363 and 364 transmit respective data to the mobile station 366, and the mobile station 366 can receive the data by multi-carrier transmission such as OFDM by using different sub-carriers, e.g. by receiving data from the base station 363 with a sub-carrier No. 1, and receiving data from the base station 364 with a sub-carrier No. 2.

Thus, a larger amount of data can be transmitted than when the mobile station 366 exchange same data with the base stations 363 and 364.

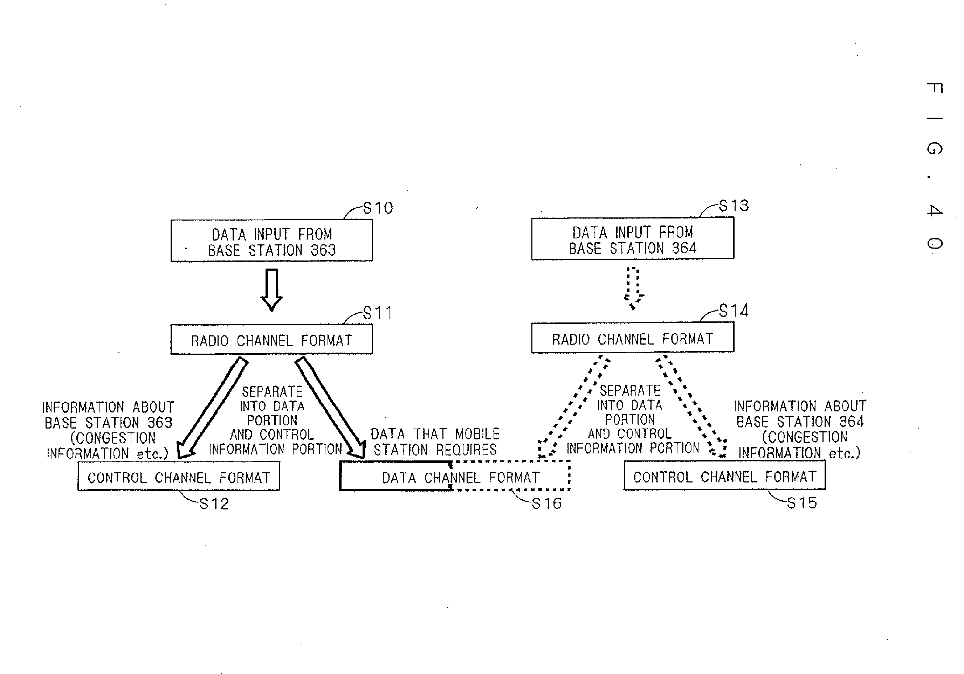

It is also possible to divide one data sequence into multiple data pieces and transmit them to different base stations. An example of operation in such a case is illustrated in FIG. 40.

FIG. 40 is a flowchart illustrating a method of dividing and coupling data respectively in channel coding and channel decoding.

FIG. 40 shows a method of channel decoding where the mobile station 366 receives different data respectively from the base stations 363 and 364.

As defined in 3GPP TS25.212, for example, the channel decoding is to convert from a frame format suitable for the physical layer into a format suitably for an upper layer.

In FIG. 40, when data from the base station 363 is inputted (Step S10), it is converted into a radio channel format (Step S11). Similarly, when data from the base station 364 is inputted (Step S13), it is converted into a radio channel format (Step S14).

In the process of conversion into data format, the radio channel format is divided into a control channel format storing control information inherent to the base station and a data channel format sent to the upper-layer equipment.

Then, the control channel format received from the base station 363 is separated as control information for the base station 363 including signal congestion condition etc. (Step S12), and the control channel format received from the base station 364 is separated as control information for the base station 364 including signal congestion condition etc. (Step S15).

On the other hand, as to the data channel format, the data format received form the base station 363 and the data channel format received from the base station 364 are coupled and channel-decoded into one data sequence (Step S16). Data pieces passing through different transmission paths are thus combined; therefore, even if one transmission path is distorted, it can be corrected if the distortion of the other transmission path is small, and the mobile station can thus receive data with stronger error correcting capability.

In FIG. 40, data is processed through the opposite course to that shown in FIG. 40 when data is transmitted from the mobile station 366 to the base stations 363 and 364.

That is to say, when the mobile station 366 transmits one data sequence to different two base stations 363 and 364, the channel coding is performed in the course opposite to that shown in FIG. 40.

During the process of channel coding, the data format is divided into two data formats, and coupled with respective control formats including information such as resource specify information for the base stations 363 and 364 and information about transmission power from the base stations 363 and 364 to the mobile station 366, and they are converted to radio channel formats and transmitted respectively to the base stations 363 and 364.

The data from the mobile station are received at the base stations and channel-decoded after transmitted to the base station host apparatus, and the data are thus decoded into one data format; or, when the base stations are connected with each other, data are received from the base stations 363 and 364, and the base station 363, for example, performs channel-decoding to decode one data sequence.

When the method above is adopted, and when only the transmission path between the mobile station 366 and the base station 363 is bad and so data transmission has failed, and the mobile station 366 received a retransmission request from the base station 363, then the mobile station 366 can transmit data (to be transmitted to the base station 363) not to the base station 363 but via the base station 364. The data to be transmitted to the base station 364 has been already successfully transmitted, and therefore only the divided half data sequence is retransmitted without the need to retransmit all data sequence, and the data retransmission by radio can be achieved at high speed.

Such historical information as described in the first preferred embodiment may be contained in place of the control information in the control channel formats.

### (C. Third Preferred Embodiment)

The mobile communication systems described in the first preferred embodiment of the present invention have a configuration in which the mobile station provides historical information to base stations, but it is possible to adopt an opposite configuration in which base stations provide historical information to the mobile station and the mobile station directs beam to base stations and performs handover on the basis of the historical information.

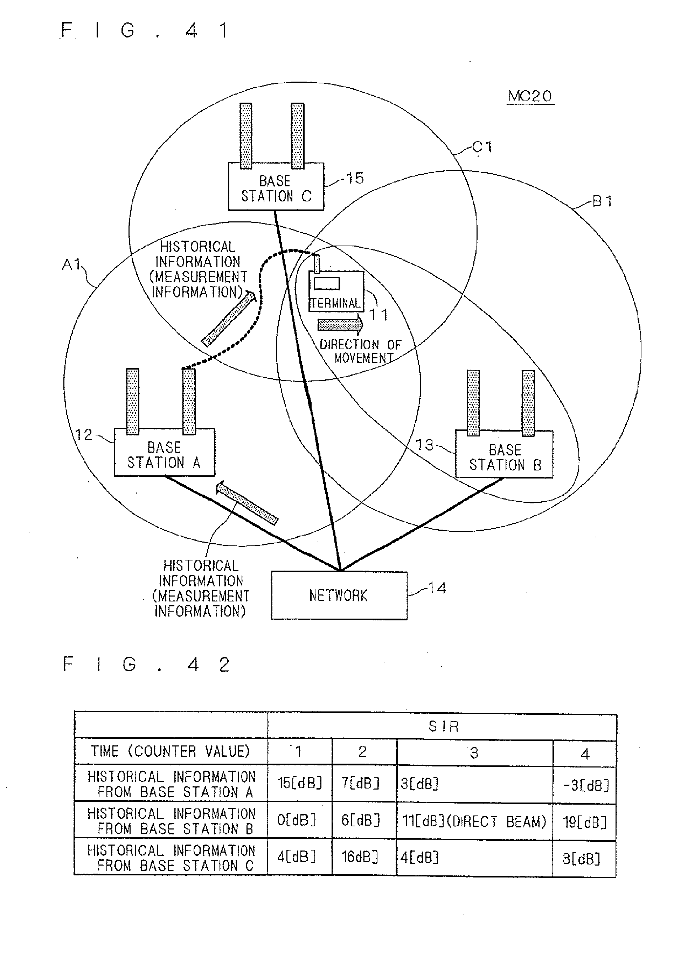

FIG. 41 illustrates the configuration of a mobile communication system MC20 according to a third preferred embodiment.
In the mobile communication system MC10 shown in FIG. 41, a base station 12, a base station 13, and a base station 15 are connected to a base station host apparatus 14.

A mobile station 11 is moving toward the base station B, currently included in the respective communication areas A1, B1, and C1 of the base stations A to C, and is in a handover condition and simultaneously connected with the base stations A to C.

In this case, the base stations A to C provide the mobile station 11 with historical information (measurement information) including the power of signals received from the mobile station 11 and SIR (uplink SIR of reception at the base stations); receiving the historical information, the mobile station 11 knows the direction of movement of the mobile station 11 on the basis of information indicating that SIR or power is becoming larger or smaller. For example, the mobile station 11 directs beam to the base station B at the time when the historical information about SIR or power from the base station B reaches a certain value. This enables a handover with appropriate timing.

The mobile station 11 can easily determine to which base station it should direct beam, e.g. by generating a table shown in FIG. 42.

That is to say, FIG. 42 shows an example in which historical information from the base stations A to C are captured at certain times (e.g. with counting by a counter provided in the mobile station 11) and a list is generated.

According to FIG. 42, the information about SIR from the base station A captured at counts 1 to 4 indicates 15 [dB], 7 [dB], 3 [dB] and -3 [dB]. Also, the information about SIR from the base station B captured at counts 1 to 4 indicates 0 [dB], 6 [dB], 11 [dB] and 19 [dB]. Also, the information about SIR from the base station C captured at counts 1 to 4 indicates 4 [dB], 6 [dB], 4 [dB] and 3 [dB].

On the basis of the table thus generated, the mobile station 11 judges that it is moving from the base station A toward the base station B because the SIR information from the base station B is becoming larger with time, and it operates to effect a handover according to a predetermined rule that it directs beam to the base station B when the historical information from the base station B, positioned in the direction of advance, exceeds 10 [dB]. It is also possible to tune to more suitable handover timing by setting the beam directing threshold to a value other than 10 [dB].

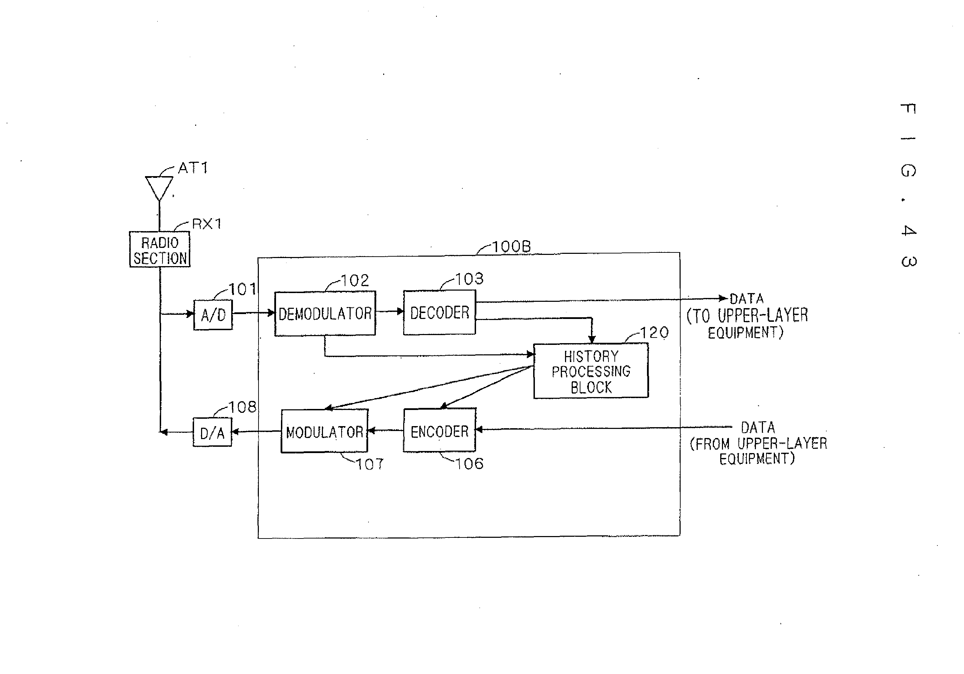

FIG. 43 illustrates the configuration of a base station for implementing a system in which the base station generates historical information and provides it to the mobile station. In FIG. 43, the same components as those of the base station of FIG. 11 are shown by the same reference characters and not described again here.

As shown in FIG. 43, the base station has a history processing block 120 in the data processor block 100B, where historical information processed in the history processing block 120 is given to the modulator 107 or encoder 106 and multiplexed and transmitted with downlink transmission data.

The history processing block 120 has a configuration similar to that of the historical information storage block 204 and the measurement block 205 of the mobile station described with FIG. 12; it measures SIR of signal from the mobile station 11, once stores the measured value, and then gives it as historical information to the modulator 107 or encoder 106.

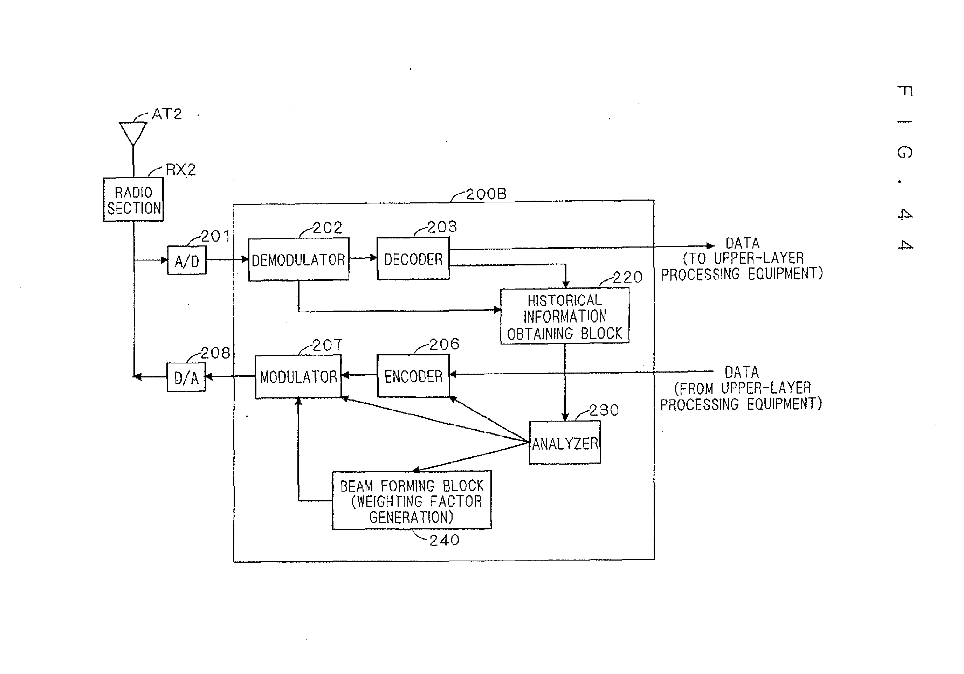

FIG. 44 illustrates the configuration of the mobile station that receives the historical information generated in the base station. In FIG. 44, the same components as those of the mobile station shown in FIG. 12 are shown with the same reference characters and not described here again.

As shown in FIG. 44, the mobile station includes a historical information obtaining block 220, an analyzer 230, and a beam forming block 240 in the data processor block 200B, where the analyzer 230 analyzes the contents of historical information from the base station, and when beam control is to be performed, the beam forming block 230 performs weighting control etc.

The historical information obtaining block 220, the analyzer 230, and the beam forming block 240 have the same configurations as the historical information obtaining block 104, the analyzer 105, and the beam forming block 109 of the base station described with FIG. 11.

Like a system in which mobile stations' historical information is provided to base stations, such a system in which base stations' historical information is provided to mobile stations offers the effects to enhance communication quality and eliminate interference through handover and beam control.

The description above has illustrated a configuration in which information about communication quality and communication condition with a mobile station, measured in base stations, is provided as historical information to the mobile station, but a configuration is possible in which information about communication quality and communication condition with a mobile station, measured in the base station host apparatus 14, is provided as historical information to the mobile station. In such a case, the base station host apparatus 14 adopts a configuration as shown in FIG. 43.

While the invention has been described in detail, the foregoing description is in all aspects illustrative and not restrictive. It is understood that numerous other modifications and variations can be devised without departing from the scope of the invention.

## Claims

1. A mobile communication system comprising a mobile station (11), a base station (12, 13, 15), and a base station host apparatus (14),
said mobile station providing said base station as historical information with any of information about communication quality between said mobile station and said base station, information about behavior of said mobile station, information about communication condition between said mobile station and said base station, and information about handover of said mobile station, and
on the basis of said historical information, said base station, or said base station host apparatus that received said historical information through said base station, giving an instruction for specifying of a handover destination for said mobile station or for beam control for said base station.

2. The mobile communication system according to claim 1,
wherein said historical information is said information about communication quality, and
said information about communication quality includes information about a reception level at said mobile station.

3. The mobile communication system according to claim 1,
wherein said historical information is said information about communication quality, and
said information about communication quality includes information about an estimated transmission path characteristic (CIR) indicating a degree of distortion of a received signal measured in said mobile station.

4. The mobile communication system according to claim 1,
wherein said historical information is said information about communication quality, and
said information about communication quality includes information about a ratio between a reception level and interference power (SIR) measured in said mobile station.

5. The mobile communication system according to claim 1,
wherein said historical information is said information about behavior of said mobile station, and
said information about behavior of said mobile station includes information about a direction of movement of said mobile station.

6. The mobile communication system according to claim 1,
wherein said historical information is said information about behavior of said mobile station, and
said information about behavior of said mobile station includes information about a speed of movement of said mobile station.

7. The mobile communication system according to claim 1,
wherein said historical information is said information about communication condition, and
said information about communication condition includes information about a transmission rate of a signal received from said base station.

8. The mobile communication system according to claim 1,
wherein said historical information is said information about handover of said mobile station, and
said information about handover of said mobile station includes information indicating that said mobile station was handed over not to an expected handover destination base station but to another base station.

9. The mobile communication system according to claim 1,
wherein said historical information is said information about handover of said mobile station, and
said information about handover of said mobile station includes information indicating that said mobile station could not transfer to a handover destination base station and communication with a handover origin base station was disconnected.

10. The mobile communication system according to claim 1,
wherein said historical information is said information about handover of said mobile station, and
said information about handover of said mobile station includes information indicating that said mobile station could not transfer to a handover destination base station and returned to communication with a handover origin base station.

11. The mobile communication system according to claim 1, wherein said base station has a log output function of externally outputting said historical information as a log.

12. The mobile communication system according to claim 1, wherein said base station host apparatus has a log output function of externally outputting said historical information as a log.

13. The mobile communication system according to claim 1,
wherein said historical information is said information about communication quality, and
said information about communication quality includes information about a degree of reduction of a reception level at said mobile station with respect to a speed of movement of said mobile station.

14. The mobile communication system according to claim 2,
wherein, on the basis of said historical information, said base station or said base station host apparatus controls increase/ decrease of the number of antenna branches used by a base station communicating with said mobile station.

15. The mobile communication system according to claim 14,
wherein said base station or said base station host apparatus controls the increase/ decrease of said number of antenna branches by using a table in which said reception level is divided into a plurality of levels and said number of antenna branches is set in association with the levels, and
said table is set such that said number of antenna branches becomes larger as said reception level becomes smaller, and said number of antenna branches becomes smaller as said reception level becomes larger.

16. The mobile communication system according to claim 7,
wherein said base station or said base station host apparatus instructs said mobile station such that a base station whose said transmission rate is the largest is a handover destination.

17. The mobile communication system according to claim 7,
wherein said base station or said base station host apparatus gives an instruction for beam control such that a base station whose said transmission rate is the largest directs beam to said mobile station.

18. The mobile communication system according to claim 1,
wherein when said mobile station is communicating with a plurality of base stations,
said historical information is said information about communication condition, and
said information about communication condition includes information about the numbers of unoccupied resources in communications respectively between said plurality of base stations and said mobile station,
and wherein said base station or said base station host apparatus dynamically adjusts assignment of said numbers of unoccupied resources on the basis of said information about the numbers of unoccupied resources.

19. The mobile communication system according to claim 1,
wherein said historical information is said information about communication condition, and
said information about communication condition includes information about the number of resources of communication between said base station and said mobile station and information about a transmission rate of a signal received from said base station,
and wherein, when said number of resources and said transmission rate both decreased, an instruction is given for beam control such that beam is directed to said mobile station, and
when said number of resources and said transmission rate both increased, the base station communicating with said mobile station is specified as a handover destination.

20. The mobile communication system according to claim 1,
wherein said historical information is said information about communication condition,
said information about communication condition is the number of error data of cyclic redundancy check (CRC) after channel decoding in the mobile station, and
said base station or said base station host apparatus calculates a transmission rate of a reception signal from said number of error data.

21. A mobile communication system comprising a mobile station (11A), a base station (12, 13, 15), and a base station host apparatus (14),
said mobile station providing said base station as historical information with information about a fading environment where said mobile station is placed, and
on the basis of said historical information, said base station, or said base station host apparatus receiving said historical information through said base station, giving an instruction for specifying of a handover destination for said mobile station or for beam control for said base station.

22. The mobile communication system according to claim 21, wherein said information about a fading environment is inputted by a user through said mobile station.

23. The mobile communication system according to claim 21, further comprising a local server (16) that provides said mobile station with said information about a fading environment where said mobile station is placed,
wherein said mobile station receives said information about a fading environment and provides said information about a fading environment to said base station.

24. The mobile communication system according to claim 23, wherein said local server stores said information about a fading environment of a place where said local server itself is placed, and when said mobile station enters its communication area, said local server provides said information about a fading environment to said mobile station.

25. A mobile communication system comprising a mobile station (366) and a plurality of base stations (362 to 365), said mobile station being capable of communicating simultaneously with said plurality of base stations,
said mobile station transmitting/ receiving data by using different sub-carriers to and from said plurality of base stations.

26. The mobile communication system according to claim 25,
wherein when said mobile station receives data from said plurality of base stations, said mobile station receives multiple divided data from said plurality of base stations with radio channel formats, and when said mobile station performs channel decoding inside, said mobile station couples the respective data portions into one data piece, and
when said mobile station transmits data to said plurality of base stations, said mobile station divides one piece of data into a plurality of data pieces, couples the data pieces with respective control information and applies channel coding, and transmits the data pieces respectively to said plurality of base stations.

27. A base station installation method in which a dead spot is identified by using said log of historical information outputted from said base station according to claim 11, so as to install a new base station.

28. A base station installation method in which a dead spot is identified by using said log of historical information outputted from said base station host apparatus according to claim 12, so as to install a new base station.

29. A mobile communication system comprising a mobile station (11), a base station (12, 13, 15), and a base station host apparatus (14),
said base station or said base station host apparatus providing said mobile station as historical information with information about communication quality between said mobile station and said base station or information about communication condition between said mobile station and said base station, and
on the basis of said historical information, said mobile station giving an instruction for specifying of a handover destination for said base station or for beam control for said base station.

30. A mobile station (11) used for communication with a base station (12, 13, 15), said mobile station having a function of providing said base station as historical information with any of information about communication quality between said mobile station and said base station, information about behavior of said mobile station, information about communication condition between said mobile station and said base station, and information about handover of said mobile station.

31. A base station (12, 13, 15) that communicates with the mobile station (11) according to claim 30, said base station having a function of, on the basis of said historical information, giving an instruction for specifying of a handover destination for said mobile station or for beam control for said base station.

32. A mobile station (11A) used for communication with a base station (12, 13, 15), said mobile station having a function of providing said base station as historical information with information about a fading environment where said mobile station is placed.

33. The mobile station according to claim 32, wherein said mobile station receives said information about a fading environment where said mobile station is placed from a local server (16).

34. A base station (12, 13, 15) that communicates with the mobile station (11A) according to claim 32, said base station having a function of, on the basis of said historical information, giving an instruction for specifying of a handover destination for said mobile station or for beam control for said base station.

35. A mobile station (366) that communicates simultaneously with a plurality of base stations (362 to 365), said mobile station having a function of transmitting/ receiving data by using different sub-carriers to and from said plurality of base stations.

36. A base station (12, 13, 15) that communicates with a mobile station (11), said base station having a function of providing said mobile station as historical information with information about communication quality with said mobile station or information about communication condition with said mobile station.

37. A mobile station (11) that communicates with the base station (12, 13, 15) according to claim 36, said mobile station having a function of, on the basis of said historical information, giving an instruction for specifying of a handover destination for said base station or for beam control for said base station.
